# EUROPÄISCHE PATENTSCHRIFT

(11) **EP 3 489 550 B1**
(45) Veröffentlichungstag und Bekanntmachung des Hinweises auf die Patenterteilung: **05.01.2022**
(21) Anmeldenummer: 18207036.7
(22) Anmeldetag: 19.11.2018
(51) Int. Cl.: F16H 57/08, F16H 57/04, F16H 1/28, F02C 7/36

(54) **PLANETENGETRIEBE UND GLEITLAGERSTIFT FÜR EIN PLANETENGETRIEBE**
PLANETARY GEAR AND JOURNAL BEARING PIN FOR A PLANETARY GEAR
TRAIN ÉPICYCLOÏDAL ET BROCHE À PALIER LISSE POUR UN TRAIN ÉPICYCLOÏDAL

(30) Priorität: 24.11.2017 DE 102017127876
(43) Veröffentlichungstag der Anmeldung: 29.05.2019
(73) Patentinhaber: Rolls-Royce Deutschland Ltd & Co KG, 15827 Blankenfelde-Mahlow (DE); Rolls-Royce plc, London N1 9FX (GB)
(72) Erfinder: CAMPBELL, Christopher, 15827 Blankenfelde-Mahlow (DE); GORENZ, Paul, 15827 Blankenfelde-Mahlow (DE); WAGNER, Frank, 15827 Blankenfelde-Mahlow (DE); NIQUE, Michael, 15827 Blankenfelde-Mahlow (DE); ASHMORE, Dr. Daren, Derby, Derbyshire DE24 8BJ (GB); SPRUCE, Mark, Derby, Derbyshire DE24 8BJ (GB)
(74) Vertreter: Müller, Wolfram Hubertus

(56) Entgegenhaltungen:
- EP-A1- 0 188 616
- EP-A2- 2 518 296
- DE-A1-102015 221 633
- US-A1- 2010 197 445

## Beschreibung

Die Erfindung betrifft ein Planetengetriebe gemäß dem Oberbegriff des Patentanspruchs 1 und einen Gleitlagerstift für ein solches Planetengetriebe.

Planetengetriebe sind allgemein bekannt. Sie werden unter anderem in Getriebefan-Triebwerken eingesetzt, um eine Untersetzung zwischen einer mit einer Turbine gekoppelten Turbinenwelle und einer mit einem Fan gekoppelten Fanwelle bereitzustellen.

Die US 2015/0300255 A1 beschreibt ein Planetengetriebe eines Getriebefan-Triebwerks, bei dem in Planetenrädern, die von einem Sonnenrad angetrieben werden und in einem feststehenden Hohlrad umlaufen, jeweils zylindrische Planeten-Gleitlagerstifte angeordnet sind, die ein geschmiertes Gleitlager zum Planetenrad bilden. Die Planeten-Gleitlagerstifte sind mit einem Drehmomentträger verbunden, der mit einer Fanwelle gekoppelt ist.

In Getriebefan-Triebwerken sind Planetengetriebe sehr großen Zentrifugalkräften und Drehmomenten ausgesetzt, die den Planeten-Gleitlagerstift und das Planetenrad verformen und den Schmierfilm im Gleitlager zwischen diesen beiden Elementen beeinflussen können, wodurch die Funktionalität des Gleitlagers beeinträchtigt wird. Insbesondere verhält es sich so, dass der zylindrische und an seinen Enden in Trägerplatten fixierte Planeten-Gleitlagerstift durch die auftretenden Kräfte Biegungen ausgesetzt ist, durch die die Schmierfilmdicke in der Mitte des Planeten-Gleitlagerstifts zunimmt und an den Enden des Planeten-Gleitlagerstifts abnimmt, was an den Enden des Planeten-Gleitlagerstifts zu einem erhöhten Schmierfilmdruck und der Gefahr eines Metall-Metall-Kontaktes zwischen dem Planeten-Gleitlagerstift und dem Planetenrad führt. Eine starke Belastung und Abnutzung des Planeten-Gleitlagerstifts an seinen Enden sind die Folge.

Durch eine verbesserte Steifigkeit des Planeten-Gleitlagerstifts könnten dessen Belastungen und Abnutzungen reduziert werden. Die hierfür erforderliche Vergrößerung der Wanddicke des Planeten-Gleitlagerstifts führt jedoch zu einer Gewichtszunahme, die bei Luftfahrtanwendungen nachteilig ist.

Die DE 10 2015 221 633 A1 beschreibt ein gattungsgemäßes Planetengetriebe mit Planetenbolzen, die formschlüssig an einem Planetenträger fixiert sind. Auf einem Planetenbolzen ist jeweils mittels eines Gleitlagers ein Planetenrad gelagert. Die das Gleitlager ausbildende Fläche des Planetenbolzens ist dabei gewölbt.

Der vorliegenden Erfindung liegt die Aufgabe zu Grunde, ein Planetengetriebe mit einem verschleißarmen Planeten-Gleitlagerstift bereitzustellen.

Diese Aufgabe wird durch einen Planetengetriebe mit den Merkmalen des Patentanspruchs 1 gelöst. Ausgestaltungen der Erfindung sind in den abhängigen Ansprüchen angegeben.

Danach betrachtet die Erfindung ein Planetengetriebe, das ein Sonnenrad, eine Mehrzahl von Planetenrädern, ein Hohlrad und eine Mehrzahl von Planeten-Gleitlagerstiften umfasst. Das Sonnenrad rotiert um eine Drehachse des Planetengetriebes und wird von einer Sonnenwelle angetrieben. Die Drehachse des Planetengetriebes definiert eine axiale Richtung des Planetengetriebes. Die Planetenräder werden von dem Sonnenrad angetrieben und stehen mit dem Hohlrad in Eingriff. Die Planeten-Gleitlagerstifte weisen jeweils eine außenseitige Anlagefläche auf, die ein axial vorderes Ende und ein axial hinteres Ende aufweist. Ein Planeten-Gleitlagerstift ist jeweils in einer axialen Öffnung eines Planetenrads angeordnet. Der Planeten-Gleitlagerstift und das Planetenrad bilden ein geschmiertes Gleitlager, wobei die aneinander angrenzende Kontaktflächen des Gleitlagers durch einen Gleitlagerspalt voneinander getrennt sind.

Die vorliegende Erfindung sieht vor, dass die Planeten-Gleitlagerstifte an ihrer Anlagefläche eine Balligkeit in dem Sinne ausbilden, dass ihr Außendurchmesser von einem maximalen Außendurchmesser zu mindestens einem axialen Ende der Anlagefläche hin abnimmt und an dem axialen Ende ein Minimum aufweist. Die mit einer Balligkeit ausgebildete Anlagefläche des Planeten-Gleitlagerstifts bildet dabei eine Kontaktfläche des Gleitlagers, das der Planeten-Gleitlagerstift mit dem Planetenrad bildet.

Die erfindungsgemäße Lösung beruht auf der Idee, den Planeten-Gleitlagerstift nicht mehr zylindrisch auszubilden, sondern mit einer Balligkeit zu versehen, die dazu führt, dass der Außendurchmesser des Planeten-Gleitlagerstifts an mindestens einem axialen Ende der Anlagefläche minimal ist. Hierdurch wird an mindestens einem Ende der Anlagefläche ein vergrößerter Gleitlagerspalt und damit einhergehend eine vergrößerte Schmierfilmdicke bereitgestellt. Dies führt dazu, dass bei im Betrieb auftretenden Deformationen und Schwingungen an den Enden der Anlagefläche, die auf Zentrifugalkräfte und eingeleitete Drehmomente zurückzuführen sind, die Schmierfilmdicke an mindestens einem axialen Ende der Anlagefläche ausreichend groß bleibt, um einen überhöhten Schmierfilmdruck und die Gefahr eines Metall-Metall-Kontaktes zwischen dem Planeten-Gleitlagerstift und dem Planetenrad zu vermeiden.

Durch die Erfindung wird das Gleitlager insofern optimiert, als auch an den axialen Enden des Gleitlagers im Betrieb parallel ausgerichtete Kontaktflächen bereitgestellt werden. Die Schmierfilmdicke weist geringere Dickenänderungen über die axiale Länge auf. Die genannten Vorteile werden dabei ohne eine Erhöhung der Wanddicke des Planeten-Gleitlagerstifts erreicht. Vielmehr kann sogar eine gewisse Gewichtsersparnis erreicht werden, da die Balligkeit der Anlagefläche durch eine Materialentfernung zu den axialen Enden der Anlagefläche hin erreicht werden kann.

Gemäß der Erfindung ist weiter vorgesehen, dass der Planeten-Gleitlagerstift minimale Außendurchmesser an beiden axialen Enden der Anlagefläche und den maximalen Außendurchmesser zwischen den axialen Enden aufweist, wobei die minimalen Außendurchmesser an den beiden axialen Enden unterschiedlich sind, und/oder dass der Planeten-Gleitlagerstift außerhalb seiner axialen Mitte und dabei zwischen den beiden axialen Enden der Anlagefläche ein Maximum seines Außendurchmessers aufweist.

Wenn der Planeten-Gleitlagerstift minimale Außendurchmesser an beiden axialen Enden der Anlagefläche und den maximalen Außendurchmesser zwischen den axialen Enden aufweist, wobei die minimalen Außendurchmesser an den beiden axialen Enden unterschiedlich sind, so definiert die Differenz zwischen dem maximalen Außendurchmesser und dem minimalen Außendurchmesser an dem einen Ende der Anlagefläche die Balligkeit zwischen dem maximalen Außendurchmesser und dem einen Ende. Des Weiteren definiert die Differenz zwischen dem maximalen Außendurchmesser und dem minimalen Außendurchmesser an dem anderen Ende der Anlagefläche die Balligkeit zwischen dem maximalen Außendurchmesser und dem anderen Ende.

Sofern der Planeten-Gleitlagerstift außerhalb seiner axialen Mitte (die mittig zwischen dem axial vorderen Ende und dem axial hinteren Ende der Anlagefläche liegt) ein Maximum seines Außendurchmessers aufweist, ist der Planeten-Gleitlagerstift asymmetrisch hinsichtlich seiner axialen Mitte ausgebildet.

Es kann vorgesehen sein, dass die Differenz zwischen dem maximalen Außendurchmesser und dem Außendurchmesser an einer betrachteten axialen Position des Planeten-Gleitlagerstifts zu beiden axialen Enden oder zu einem axialen Ende des Planeten-Gleitlagerstifts kontinuierlich zunimmt. Dies bedeutet für den Gleitlagerspalt, dass dieser - bei einer Betrachtung des Zusammenbauzustands ohne Last und im nichtrotierenden Zustand - ebenfalls zu den axialen Enden des Planeten-Gleitlagerstifts zunimmt. Dabei wird angenommen, dass die Kontaktfläche des Planetenrads, die die andere Fläche des Gleitlagers bildet, zylindrisch ausgebildet ist. Im Betrieb bzw. unter Last schmiegt sich das Planetenrad dagegen an den Planeten-Gleitlagerstift, so dass ein gleichmäßiger Spalt über die axiale Länge entsteht.

Es kann vorgesehen sein, dass die Anlagefläche des Planeten-Gleitlagerstifts im Längsschnitt eine erste konvexe Kurve ausbildet, die sich zwischen dem Maximum des Außendurchmessers und dem vorderen axialen Ende der Anlagefläche erstreckt, und eine zweite konvexe Kurve ausbildet, die sich zwischen dem Maximum des Außendurchmessers und dem hinteren axialen Ende der Anlagefläche erstreckt. Dabei kann die konvexe Kurve grundsätzlich in beliebiger Weise geformt sein. Ausführungsbeispiele sehen vor, dass die erste Kurve und/oder die zweite Kurve als Kreisbogen ausgebildet ist, dass die erste Kurve und/oder die zweite Kurve parabelförmig ausgebildet ist, oder dass die erste Kurve und/oder die zweite Kurve geradlinig ausgebildete Kurvenstücke aufweist. Im letzten Fall läuft beispielsweise die Anlagefläche des Planeten-Gleitlagerstifts zu seinen axialen Enden konisch zusammen. Auch kann vorgesehen sein, dass die erste Kurve und/oder die zweite Kurve aus mehreren unterschiedlich gekrümmten Kurvenstücken zusammengesetzt ist. Dabei kann weiter vorgesehen sein, dass eines oder mehrere dieser Kurvenstücke geradlinig/linear ausgebildet sind.

Das Maximum des Außendurchmessers des Planeten-Gleitlagerstifts wird in einer Ausgestaltung der Erfindung durch eine Umfangslinie gebildet (die sich in Umfangsrichtung des Planeten-Gleitlagerstifts erstreckt). Im Längsschnitt des Planeten-Gleitlagerstifts bildet das Maximum somit einen Punkt. Dies bedeutet, dass die genannte erste Kurve und die genannte zweite Kurve stetig ineinander übergehen, somit die Anlagefläche durch eine einzige gekrümmte Kurve gebildet sein kann (die ins Ausführungsvarianten aus unterschiedlich gekrümmten Kurvenstücken zusammengesetzt sein kann). Dementsprechend kann vorgesehen sein, dass die Anlagefläche des Planeten-Gleitlagerstifts vollständig kreisförmig oder parabelförmig mit einem Maximum des Außendurchmessers in der axialen Mitte des Planeten-Gleitlagerstifts oder alternativ außerhalb der axialen Mitte des Planeten-Gleitlagerstifts ausgebildet ist.

Eine alternative Ausgestaltung der Erfindung sieht vor, dass das Maximum des Außendurchmessers des Planeten-Gleitlagerstifts durch einen zylindrischen Bereich konstanten Außendurchmessers gebildet ist, der sich über eine definierte axiale Länge erstreckt. Diese axiale Länge kann derart bemessen sein, dass das Verhältnis der axialen Länge des zylindrischen Bereichs zur axialen Gesamtlänge der Anlagefläche zwischen 0 und 0,75 liegt.

Ein solcher zylindrischer Plateaubereich ist dabei außermittig ausgebildet. An ihn können sich beispielsweise im Längsschnitt kreisförmige, parabelförmige oder gradlinige Flächen anschließen.

Eine Ausgestaltung der Erfindung sieht vor, dass das Verhältnis der halben Differenz zwischen dem maximalen Außendurchmesser und dem minimalen Außendurchmesser des Planeten-Gleitlagerstifts zum maximalen Außendurchmesser zwischen 0,00005 und 0,005 liegt. Genannte halben Differenz gibt dabei gerade die Balligkeit des Planeten-Gleitlagerstifts an. Sofern der Planeten-Gleitlagerstift unterschiedliche minimale Außendurchmesser an den beiden axialen Enden der Anlagefläche aufweist, gilt das genannte Verhältnis jeweils im Hinblick auf den maximalen Außendurchmesser und den minimalen Außendurchmesser an dem jeweils betrachteten axialen Ende.

Es kann vorgesehen sein, dass der Planeten-Gleitlagerstift als Rotationskörper ausgebildet ist, d. h. er ist rotationssymmetrisch bezüglich der Längsachse des Gleitlagerstifts ausgebildet. Dies ist jedoch nicht notwendigerweise der Fall. Alternativ kann vorgesehen sein, dass der Planeten-Gleitlagerstift eine ballig ausgebildete Anlagefläche lediglich über einen Umfangswinkel kleiner 360°, insbesondere im Bereich von ±60° um den nominell belasteten Bereich aufweist. Das erfindungsgemäße ballige Profil des Planeten-Gleitlagerstifts erstreckt sich somit nicht über den gesamten Umfang des Planeten-Gleitlagerstifts, sondern in Umfangsrichtung nur über einen definierten Winkelbereich. Der beschriebene positive Einfluss auf das Gleitlager ist auch bei einer solchen Ausgestaltung gegeben. Zusätzlich wird der Ölverbrauch für die Schmierung reduziert, da eine vergrößerte Schmierfilmdicke an den axialen Enden nicht über den gesamten Umfang bereitgestellt wird.

Eine Ausführungsvariante einer ballig ausgebildeten Anlagefläche, die sich über einen Umfangswinkel kleiner 360° erstreckt, sieht vor, dass der Umfangswinkel, über den die ballig ausgebildete Anlagefläche sich erstreckt, in axialer Richtung des Planeten-Gleitlagerstifts variiert. Eine vergrößerte Schmierfilmdicke kann dadurch exakt abhängig von der axialen Position eingestellt werden.

Dabei sieht eine Ausgestaltung vor, dass die ballig ausgebildete Anlagefläche sich am maximalen Außendurchmesser über einen minimalen Umfangswinkel erstreckt und der Umfangswinkel, über den die ballig ausgebildete Anlagefläche sich erstreckt, sich vom maximalen Außendurchmesser zu den axialen Enden der Anlagefläche hin stetig zu einem maximalen Umfangswinkel vergrößert, so dass die ballig ausgebildete Anlagefläche sich an den axialen Enden der Anlagefläche über einen größeren Umfangswinkel erstreckt als im Bereich des maximalen Außendurchmessers. Dabei kann vorgesehen sein, dass der maximale Außendurchmesser in einem zylindrischen Bereich realisiert ist. Weiter kann vorgesehen sein, dass die radiale Höhe der Balligkeit in Umfangsrichtung zu den Begrenzungslinien der ballig ausgebildeten Anlagefläche hin abnimmt.

Sofern der Planeten-Gleitlagerstift rotationssymmetrisch ausgebildet ist, ist der Außendurchmesser an einer betrachteten axialen Position für alle Punkte einer Umfangslinie der gleiche. Sofern der Planeten-Gleitlagerstift nicht rotationssymmetrisch ausgebildet ist, wird als Außendurchmesser einer betrachteten axialen Position im Sinne der vorliegenden Erfindung der größte Außendurchmesser betrachtet.

Der Planeten-Gleitlagerstift weist gemäß einer Ausgestaltung der Erfindung ein axial vorderes Ende und ein axial hinteres Ende auf, die axial beabstandet zu dem axial vorderen Ende und dem axial hinteren Ende der Anlagefläche sind, wobei der Planeten-Gleitlagerstift an seinem vorderen axialen Ende mit einer vorderen Trägerplatte und an seinem hinteren axialen Ende mit einer hinteren Trägerplatte verbunden ist. Der Planeten-Gleitlagerstift erstreckt sich somit an beiden Enden jenseits der Anlagefläche und ist dort jeweils mit einer Trägerplatte verbunden. Es ist also zu unterscheiden zwischen den axialen Enden der Anlagefläche und den axialen Enden des Planeten-Gleitlagerstifts.

Es kann vorgesehen sein, dass die Planeten-Gleitlagerstifte innenseitig einer axiale Öffnung aufweisen und dazu ausgebildet sind, einen Trägerstift eines Drehmomentträgers darin aufzunehmen.

Weiter kann vorgesehen sein, dass die Planeten-Gleitlagerstifte mit einem Drehmomentträger gekoppelt sind, wobei der Drehmomentträger bei drehendem Sonnenrad und fest angeordnetem Hohlrad mit untersetzter Drehzahl um die Drehachse des Planetengetriebes rotiert. Der Drehmomentträger ist dabei beispielsweise mit einer Fanwelle gekoppelt. Die Planetenräder rotieren sowohl um ihre eigene Achse als auch um die Drehachse des Planetengetriebes, dies jeweils mit unterschiedlichen Drehzahlen.

Weiter kann vorgesehen sein, dass die Planeten-Gleitlagerstifte innen hohl und dazu ausgebildet sind, einen Trägerstift eines Drehmomentträgers aufzunehmen, wobei über den Trägerstift eine Drehmomentübertragung erfolgt.

Alternativ kann vorgesehen sein, dass die Planeten-Gleitlagerstifte fest mit einer vorderen Trägerplatte und mit einer hinteren Trägerplatte verbunden sind, wobei die vordere Trägerplatte zur Drehmomentübertragung mit dem Drehmomentträger gekoppelt ist. Die Planeten-Gleitlagerstifte können mit den Trägerplatten dabei beispielsweise verschweißt oder verschraubt sein.

Eine weitere Ausgestaltung der Erfindung sieht vor, dass die Planeten-Gleitlagerstifte einschließlich der ballig ausgebildeten Anlagefläche einstückig ausgebildet sind. Es handelt sich somit um einteilige Komponenten.

Der Planeten-Gleitlagerstift der vorliegenden Erfindung weist eine ballig ausgebildete außenseitigen Anlagefläche auf. Der in der Regel hohl, d. h. mit einer axialen Öffnung bzw. Bohrung versehene Planeten-Gleitlagerstift kann dabei an seiner Innenfläche grundsätzlich beliebig ausgebildet sein. Beispielsweise kann der Planeten-Gleitlagerstift innenseitig hohlzylindrisch ausgebildet sein, also eine axiale Öffnung konstanten Durchmessers aufweisen. In anderen Ausführungsvarianten kann vorgesehen sein, dass der Innendurchmesser des Planeten-Gleitlagerstifts entlang seiner axialen Erstreckung variiert.

In einem weiteren Erfindungsaspekt betrifft die Erfindung ein Getriebefan-Triebwerk, das eine Fanstufe, eine Fanwelle, über die die Fanstufe angetrieben wird, und eine Turbinenwelle umfasst. Bei der Turbinenwelle handelt es sich beispielsweise um eine Welle, die mit einer Niederdruckturbine oder einer Mitteldruckturbine des Triebwerks gekoppelt ist. Es ist vorgesehen, dass die Turbinenwelle und die Fanwelle über ein Planetengetriebe gemäß Anspruch 1 gekoppelt sind, wobei die Turbinenwelle die Sonnenwelle bildet, die Planeten-Gleitlagerstifte mit einem Drehmomentträger gekoppelt sind und der Drehmomentträger mit der Fanwelle gekoppelt ist.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei durch die Drehachse des Planetengetriebes definiert, die identisch mit einer Maschinenachse eines Getriebefan-Triebwerks ist, in dem das Planetengetriebe angeordnet ist. Von der x-Achse ausgehend zeigt die radiale Richtung radial nach außen. Begriffe wie "vor", "hinter", "vordere" und "hintere" beziehen sich auf die axiale Richtung bzw. die Strömungsrichtung im Triebwerk, in dem das Planetengetriebe angeordnet ist. Begriffe wie "äußere" oder "innere" beziehen sich auf die radiale Richtung.

Die Erfindung wird nachfolgend unter Bezugnahme auf die Figuren der Zeichnung anhand mehrerer Ausführungsbeispiele näher erläutert. Es zeigen:
- Figur 1: eine vereinfachte schematische Schnittdarstellung eines Getriebefan-Triebwerks;
- Figur 2: eine Schnittdarstellung von Elementen eines Planetengetriebes, das zum Einsatz in einem Getriebefantriebwerk geeignet ist, wobei eine Sonnenwelle, ein Sonnenrad, ein Planetenrad, ein Planeten-Gleitlagerstift und ein Trägerstift eines Drehmomentträgers dargestellt sind, und wobei der Planeten-Gleitlagerstift an seiner Anlagefläche eine Balligkeit ausbildet;
- Figur 3: eine vergrößerte Darstellung des Planetenrads und des Planeten-Gleitlagerstifts der Figur 2;
- Figur 4: eine Darstellung von Elementen eines alternativen Planetengetriebes, bei dem anders als bei dem Planetengetriebe der Figuren 2 und 3 kein Trägerstift vorgesehen ist und stattdessen eine Drehmomentübertragung auf einen Drehmomentträger über eine fest mit den Planeten-Gleitlagerstiften verbundene Trägerplatte erfolgt;
- Figur 5: Elemente des Planetengetriebes der Figur 4 in einer teilweise geschnittenen Ansicht;
- Figur 6: eine Schnitterstellung eines Planeten-Gleitlagerstifts gemäß den Figuren 2 und 3;
- Figur 7: eine Schnitterstellung eines weiteren Ausführungsbeispiels eines mit einer Balligkeit versehenen Planeten-Gleitlagerstifts, wobei der Planeten-Gleitlagerstift eine kreisbogenförmige Anlagefläche bildet;
- Figur 8: eine Schnitterstellung eines weiteren Ausführungsbeispiels eines mit einer Balligkeit versehenen Planeten-Gleitlagerstifts, wobei der Planeten-Gleitlagerstift eine asymmetrisch ausgebildete Anlagefläche bildet;
- Figur 9: eine Schnitterstellung eines weiteren Ausführungsbeispiels eines mit einer Balligkeit versehenen Planeten-Gleitlagerstifts, wobei der Planeten-Gleitlagerstift symmetrisch ausgebildet ist und die Anlagefläche unterschiedlich geformte Bereiche aufweist;
- Figur 10: eine Schnitterstellung eines weiteren Ausführungsbeispiels eines mit einer Balligkeit versehenen Planeten-Gleitlagerstifts, wobei der Planeten-Gleitlagerstift asymmetrisch ausgebildet ist und die Anlagefläche unterschiedlich geformte Bereiche aufweist;
- Figur 11: eine teilweise geschnittene Darstellung eines Planeten-Gleitlagerstifts, der in einem Planetengetriebe gemäß den Figuren 4 und 5 angeordnet ist;
- Figur 12: den Planeten-Gleitlagerstift der Figur 11 in vergrößerter geschnittener Darstellung;
- Figur 13: die Schmierfilmdicke eines Gleitlagers in Abhängigkeit von der axialen Position des Gleitlagers für einen Planeten-Gleitlagerstift mit ballig ausgebildeter Anlagefläche;
- Figur 14: die Schmierfilmdicke eines Gleitlagers in Abhängigkeit von der axialen Position des Gleitlagers für einen zylindrisch geformten Planeten-Gleitlagerstift;
- Figur 15: in perspektivischer Darstellung ein weiteres Ausführungsbeispiel eines Planeten-Gleitlagerstifts, wobei der Planeten-Gleitlagerstift eine ballig ausgebildete Anlagefläche über einen Umfangswinkel kleiner als 360° realisiert;
- Figur 16: eine um 180° gedrehte perspektivische Darstellung des Ausführungsbeispiels der Figur 15;
- Figur 17: eine Seitenansicht des Planeten-Gleitlagerstifts der Figur 16;
- Figur 18: eine Ansicht von oben auf den Planeten-Gleitlagerstift der Figur 16;
- Figur 19: eine Ansicht von links des Planeten-Gleitlagerstifts der Figur 16, wobei die Ansicht eine erste Parametrisierung im Hinblick auf die ballig ausgebildete Anlagefläche enthält; und
- Figur 20: eine Ansicht von links des Planeten-Gleitlagerstifts der Figur 16, wobei die Ansicht eine zweite Parametrisierung im Hinblick auf die ballig ausgebildete Anlagefläche enthält.

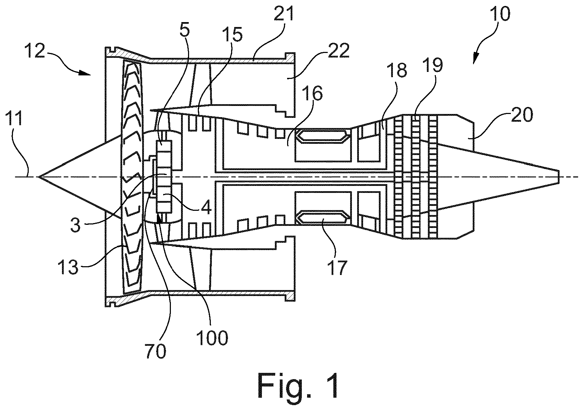

Die Figur 1 zeigt ein Getriebefan-Triebwerk 10 mit einer Drehachse 11, das für eine Verwendung in Flugzeugen vorgesehen ist. In der Richtung der axialen Durchströmung weist das Getriebefan-Triebwerk 10 hintereinander einen Lufteinlauf 12, eine Fanstufe 13 (grundsätzlich sind auch mehr als eine Fanstufe 13 möglich), ein Getriebe 100, einen Mitteldruckverdichter 15, einen Hochdruckverdichter 16, eine Verbrennungsvorrichtung 17, eine Hochdruckturbine 18, eine Mitteldruckturbine 19 und eine Düse 20 auf. Ein Fangehäuse 21 umgibt die Fanstufe 13 und definiert den Lufteinlauf 12.

Das Getriebefan-Triebwerk 10 arbeitet grundsätzlich in konventioneller Weise, wobei in den Lufteinlauf 12 eintretende Luft von der Fanstufe 13 beschleunigt wird. Dabei werden zwei Luftstrome erzeugt: Ein erster Strom tritt in den Mitteldruckverdichter 15 ein, ein zweiter Luftstrom fließt durch einen Nebenstromkanal 22, wobei der zweite Luftstrom den größten Anteil am Schub des Getriebefan-Triebwerks 10 liefert. Der Mitteldruckverdichter 15 verdichtet den eintretenden Luftstrom, bevor er in den Hochdruckverdichter 16 gelangt, in dem eine weitere Verdichtung erfolgt. Die verdichtete Luft, die aus dem Hochdruckverdichter 16 austritt, wird in die Verbrennungsvorrichtung 17 geführt, wo sie mit Brennstoff vermischt wird und die Mischung dann zur Verbrennung gebracht wird. Die heißen Verbrennungsgase werden in der Hochdruckturbine 18 und in der Mitteldruckturbine 19 entspannt, bevor sie durch die Düse 20 austreten und somit zusätzlichen Schub liefern.

Hinter dem Fanstufe 13 bildet das Getriebefan-Triebwerk 10 somit einen Nebenstromkanal 22 und einen Primärstromkanal aus. Der Primärstromkanal führt durch das Kerntriebwerk (Gasturbine), das den Mitteldruckverdichter 15, den Hochdruckverdichter 16, die Verbrennungsvorrichtung 17, die Hochdruckturbine 18 und die Mitteldruckturbine 19 umfasst. Der Nebenstromkanal 22 leitet im Betrieb des Getriebefan-Triebwerks 10 von der Fanstufe 13 angesaugte Luft am Kerntriebwerk vorbei.

Die Hochdruckturbine 18 und die Mitteldruckturbine 19 treiben über Wellenvorrichtungen jeweils den Hochdruckverdichter 16 und den Mitteldruckverdichter 15 an. Eine Mitteldruckwelle treibt die Fanstufe 13 über das Getriebe 100 an. Das Getriebe 100 ist dabei als Untersetzungsgetriebe ausgebildet, das die Drehzahl der Fanstufe 13 im Vergleich zum Mitteldruckverdichter 15 und zur Mitteldruckturbine 19 reduziert. Das Getriebe 100 ist in der dargestellten Ausführungsform ein Planetengetriebe mit einem statischen Hohlrad 5 und umlaufenden Planetenrädern 4, die im Hohlrad 5 umlaufen. Der Antrieb des Getriebes 100 erfolgt über ein Sonnenrad 3, das mit der Mitteldruckwelle gekoppelt ist. Der Abtrieb erfolgt in der dargestellten Ausführungsform über einen Drehmomentträger 70, der mit den Planetenrädern 4 gekoppelt ist.

Grundsätzlich sind auch andere Ausführungsformen des Getriebes 100 möglich, wobei z.B. das Hohlrad 5 beweglich ausgebildet sein kann, so dass der Abtrieb über das Hohlrad 5 erfolgt.

Die Ausgestaltung des Getriebefan-Triebwerks 10 gemäß der Figur 1 ist lediglich beispielhaft zu verstehen. Insbesondere die Anordnung der Wellen kann auch anders gewählt werden, wobei grundsätzlich Zwei- oder Dreiwellenanordnungen möglich sind. Beispielsweise kann alternativ eine Dreiwellenanordnung vorgesehen sein, die eine Niederdruckwelle, die die Niederdruckturbine mit dem Fan verbindet, eine Mitteldruckwelle, die die Mitteldruckturbine mit dem Mitteldruckverdichter verbindet, und eine Hochdruckwelle, die die Hochdruckturbine mit dem Hochdruckverdichter verbindet, umfasst. Dabei ist die Fanstufe 13 über ein Getriebe mit der Niederdruckwelle verbunden ist. Weiter können, wenn das Turbofantriebwerk keinen Mitteldruckverdichter und keine Mitteldruckturbine aufweist, nur eine Niederdruckwelle und eine Hochdruckwelle vorhanden sein, wobei wiederum die Fanstufe 13 über ein Getriebe mit der Niederdruckwelle verbunden ist.

Die beschriebenen Komponenten besitzen mit der Drehachse 11 eine gemeinsame Rotations- bzw. Maschinenachse. Die Drehachse 11 definiert eine axiale Richtung des Triebwerks 10. Eine radiale Richtung des Triebwerks 10 verläuft senkrecht zur axialen Richtung.

Im Kontext der vorliegenden Erfindung ist die Ausbildung des Planetengetriebes 100 von Bedeutung.

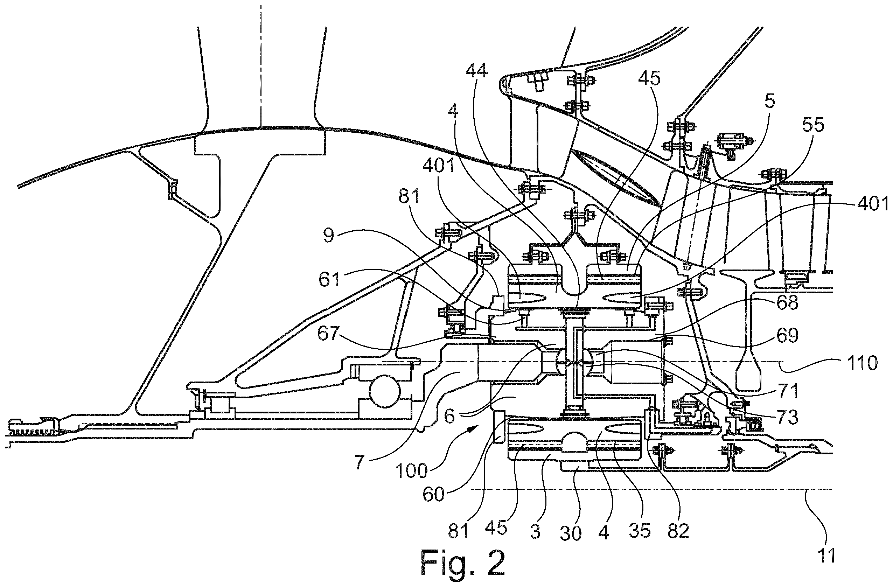

Die Figur 2 zeigt ein Ausführungsbeispiel eines Planetengetriebes 100 in einer Schnittdarstellung. Das Planetengetriebe 100 umfasst ein Sonnenrad 3, das von einer Sonnenwelle 30 angetrieben wird. Bei der Sonnenwelle 30 handelt sich beispielsweise um die Mitteldruckwelle der Figur 1. Das Sonnenrad 3 und die Sonnenwelle 30 drehen sich dabei um eine Drehachse 11, die eine axiale Richtung des Planetengetriebes 100 definiert.

Das Planetengetriebe 100 umfasst des Weiteren eine Mehrzahl von Planetenrädern 4, von denen in der Schnittdarstellung der Figur 2 eines dargestellt ist. Das Sonnenrad 3 treibt die Mehrzahl der Planetenräder 4 an, wobei eine Verzahnung 35 des Sonnenrad 3 mit einer Verzahnung 45 des Planetenrads 4 in Eingriff steht. Bei der Verzahnung 35, 45 handelt es sich beispielsweise um eine Doppelschrägverzahnung.

Die folgende Beschreibung eines Planetenrads 4 gilt für sämtliche Planetenräder, die von dem Sonnenrad 3 angetrieben werden. Das Planetenrad 4 ist hohlzylindrisch ausgebildet und bildet eine äußere Mantelfläche und eine innere Mantelfläche 44. Das Planetenrad 4 rotiert - angetrieben durch das Sonnenrad 3 - um eine Drehachse 110, die parallel zur Drehachse 11 verläuft. Die äußere Mantelfläche des Planetenrads 4 bildet eine Verzahnung 45 aus, die mit der Verzahnung 55 eines Hohlrads 5 in Eingriff steht. Die Verzahnungen 45, 55 können ebenfalls als Doppelschrägverzahnung ausgebildet sein. Das Hohlrad 5 ist feststehend, d. h. nichtrotierend angeordnet. Die Planetenräder 4 rotieren aufgrund ihrer Kopplung mit dem Sonnenrad 3 und wandern dabei entlang des Umfangs des Hohlrads 5. Die Rotation der Planetenräder 4 entlang des Umfangs des Hohlrads 5 und dabei um die Drehachse 110 ist langsamer als die Rotation der Sonnenwelle 3, wodurch eine Untersetzung bereitgestellt wird.

Das Planetenrad 4 weist angrenzend an seine innere Mantelfläche 44 eine zentrierte axiale Öffnung auf. In die Öffnung eingebracht ist ein Planeten-Gleitlagerstift 6, wobei der Planeten-Gleitlagerstift 6 und das Planetenrad 4 an ihren einander zugewandten Flächen ein geschmiertes Gleitlager bilden. Zur Schmierung des Gleitlagers können sich radial erstreckende Schmierfilmöffnungen 61 im Planeten-Gleitlagerstift 6 ausgebildet sein, durch die von innen eingesprühtes oder in anderer Weise zugeführtes Schmieröl in einen Gleitlagerspalt 9 zwischen dem Planeten-Gleitlagerstift 6 und dem Planetenrad 4 zugeführt werden kann. Dabei wird darauf hingewiesen, dass im Planeten-Gleitlagerstift 6 auch davon abweichende oder zusätzliche Mittel zum Zuführen von Schmieröl zum Gleitlager ausgebildet sein können.

Im Betrieb weisen das Planetenrad 4 und der Planeten-Gleitlagerstift 6 nicht exakt die gleiche Achse auf, da das in hydrodynamischer Bauweise ausgeführte Gleitlager eine Exzentrizität im Bereich von Zehntelmillimetern mit sich bringt.

Der Planeten-Gleitlagerstift 6 weist eine außenseitige Anlagefläche 60 auf, die ballig ausgebildet ist. Dementsprechend nimmt der Außendurchmesser des Planeten-Gleitlagerstifts zu den axialen Enden der Anlagefläche 60 hin ab und weist dort ein Minimum auf.

Der Planeten-Gleitlagerstift 6 weist angrenzend an seine Innenfläche 69 ebenfalls eine axiale Öffnung bzw. Bohrung auf und ist dazu vorgesehen, in dieser einen Trägerstift 7 eines Drehmomentträgers aufzunehmen. Der Trägerstift 7 ist dabei in einem verjüngten Bereich 71 des Trägerstifts 7 in einem Gelenklager 73 innerhalb der Bohrung des Planeten-Gleitlagerstifts 6 gelagert. Das Gelenklager 73 erlaubt eine gewisse Schiefstellung des Trägerstiftes 7 gegenüber der Drehachse 110. Ein Trägerstift 7 ist in jedem der Planeten-Gleitlagerstifte 6 des Planetengetriebes 100 angeordnet. Die Trägerstifte 7 sind an ihren aus der Öffnung des Planeten-Gleitlagerstifts 6 herausragenden Enden fest miteinander verbunden und bilden dabei einen Drehmomentträger entsprechend dem Drehmomentträger 70 der Figur 1. Der Drehmomentträger bildet ein Abtriebselement des Planetengetriebes ist mit der Fanwelle bzw. allgemein mit einer Abtriebswelle gekoppelt.

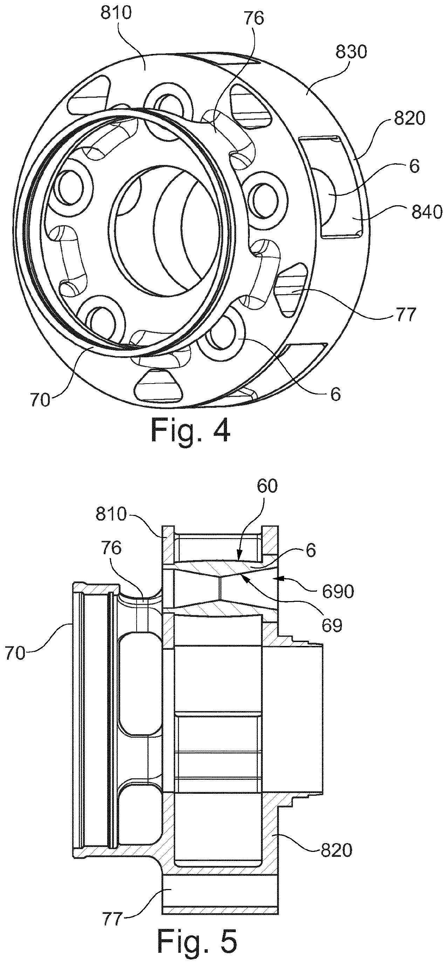

Die genaue Form des Trägerstiftes 7 und dessen dargestellte Lagerung an der Innenfläche des Planeten-Gleitlagerstifts 6 sind dabei nur beispielhaft zu verstehen. Auch wird darauf hingewiesen, dass eine Kopplung des Planeten-Gleitlagerstifts 6 mit einem Drehmomentträger auch in anderer Weise erfolgen kann, wie anhand der Figuren 4 und 5 beispielhaft aufgezeigt wird.

Die Figur 2 zeigt des Weiteren eine vordere Trägerplatte 81 und eine hintere Trägerplatte 82. Der Planeten-Gleitlagerstift 6 ist mit der vorderen Trägerplatte 81 und mit der hinteren Trägerplatte 82 befestigt, beispielsweise mit diesen verschraubt oder verschweißt. Dazu ist vorgesehen, dass der Planeten-Gleitlagerstift 6 ein axial vorderes Ende 67 und ein axial hinteres Ende 68 aufweist, die jeweils axial gegenüber den Enden der Anlagefläche 60 hervorstehen, wobei der Planeten-Gleitlagerstift 6 an den Enden 67, 68 mit den Trägerplatten 81, 82 befestigt ist.

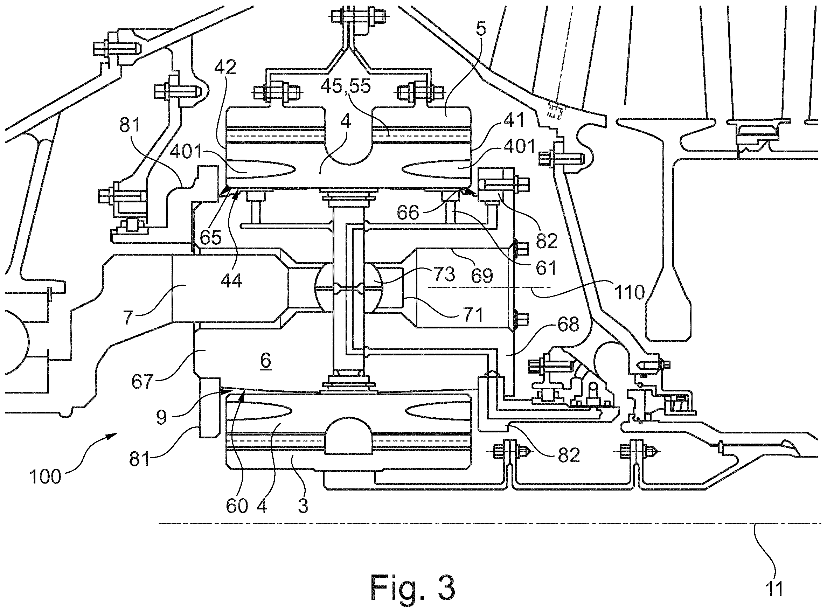

Der Aufbau des Planetenrads 4 und des Planeten-Gleitlagerstifts 6 wird nachfolgend weitergehend in Bezug auf die Figur 3 erläutert, die einen Ausschnitt aus der Figur 2 darstellt.

Gemäß der Figur 3 ist zu erkennen, dass das Planetenrad 4 an seinen beiden Stirnseiten 41, 42 jeweils eine Aussparung 401 ausbildet, die sich von der Stirnseite 41, 42 im Wesentlichen in axialer Richtung (bzw. ausgehend von der Stirnseite 41 entgegen der axialen Richtung) in das Innere des Planetenrads 4 erstreckt. Hierdurch werden die Masse des Planetenrads 4 und die Steifigkeit des Planetenrads 4 zu seinen Stirnseiten 41, 42 hin reduziert.

Das Gleitlager zwischen dem Planeten-Gleitlagerstift 6 und dem Planetenrad 4 wird durch die zylindrische innere Mantelfläche 44 des Planetenrads 4 und die mit einer Balligkeit versehene Anlagefläche 60 des Planeten-Gleitlagerstifts 6 gebildet. Der im Bereich des Gleitlagers ausgebildete Gleitlagerspalt 9 nimmt dabei aufgrund der Krümmung der Anlagefläche 60 zum axial vorderen Ende und zum axial hinteren Ende des Gleitlagers in seiner radialen Dicke zu. Bei hohen Drehmomenten und Zentrifugalkräften können sich die aneinander angrenzenden Flächen 44, 60 des Gleitlagers jedoch an dessen Enden im Wesentlichen parallel ausrichten. Hierzu tragen auch die in dem Planetenrad 4 ausgebildeten Aussparungen 401 bei, die diesem an seinen Enden eine erhöhte Flexibilität geben.

Die Anlagefläche 60 weist ein axial vorderes Ende 65 und ein axial hinteres Ende 66 auf.

Die Figuren 4 und 5 zeigen Elemente eines weiteren Planetengetriebes. Das Planetengetriebe der Figuren 4 und 5 ist grundsätzlich wie das Planetengetriebe der Figuren 2 und 3 aufgebaut. Es unterscheidet sich lediglich in der Art, in der das Drehmoment abgenommen und auf einen Drehmomentträger (entsprechend dem Drehmomentträger 70 der Figur 1) übertragen wird. Die Figur 4 zeigt nur solche Elemente des Planetengetriebes, die diese unterschiedliche Art der Drehmomentübertragung betreffen. Die übrigen, nicht dargestellten Elemente entsprechen der Ausgestaltung der Figuren 2 und 3. Insbesondere umfasst das Getriebe wie in Bezug auf die Figuren 2 und 3 erläutert ein Sonnenrad, eine Sonnenwelle, eine Mehrzahl von Planetenrädern, die von dem Sonnenrad angetrieben werden, und ein Hohlrad.

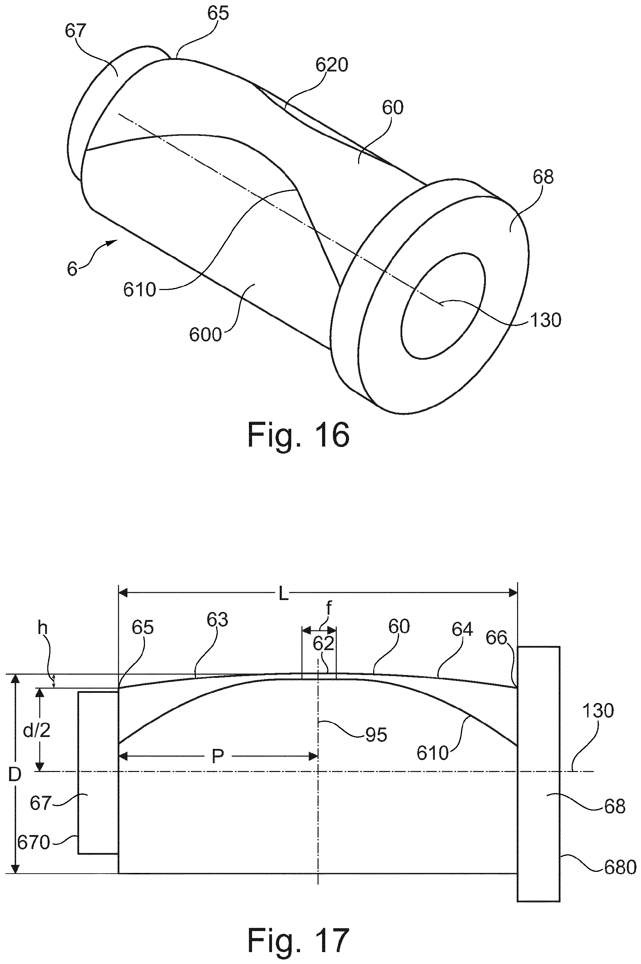

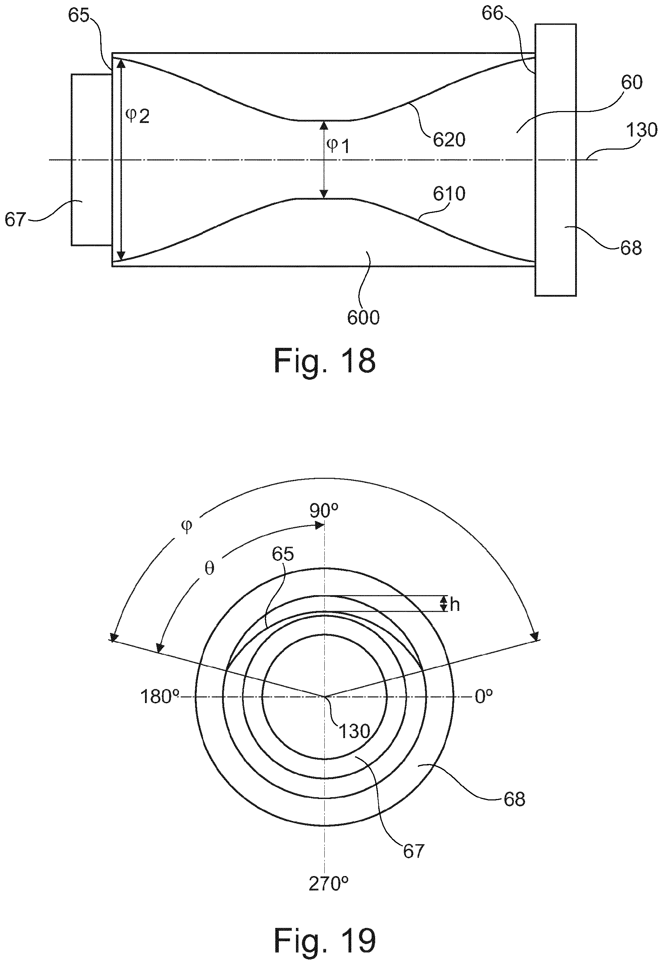

In den Figuren 4 und 5 ist zu erkennen, dass die Planeten-Gleitlagerstifte 6 fest mit einer vorderen Trägerplatte 810 und einer hinteren Trägerplatte 820 verbunden sind. Sie sind mit den Trägerplatten 810, 820 beispielsweise fest verschraubt oder verschweißt. Der Planeten-Gleitlagerstift 6 weist ebenso wie im Ausführungsbeispiel der Figuren 2 und 3 jeweils eine ballige außenseitige Anlagefläche 60 auf. An seiner Innenfläche 69 bildet der Planeten-Gleitlagerstift 6 eine Bohrung 690 aus, deren Innendurchmesser zur axialen Mitte des Planeten-Gleitlagerstifts hin abnimmt. Im dargestellten Ausführungsbeispiel ist die Bohrung 690 doppelt konisch ausgebildet. Hierauf wird in Bezug auf die Figuren 17 und 18 näher eingegangen werden.

Anders als beim Ausführungsbeispiel der Figuren 2 und 3 nimmt die axiale Bohrung 690 des Planeten-Gleitlagerstifts 6 keinen Trägerstift eines Drehmomentträgers auf, sondern ist leer. Ein Trägerstift ist nicht vorhanden. Die Übertragung eines Drehmoments auf einen Drehmomentträger 70 erfolgt über Verbindungsstege 76, die den Drehmomentträger 70 fest mit der vorderen Trägerplatte 810 verbinden. Der Drehmomentträger 70 ist im dargestellten Ausführungsbeispiel als Ring ausgebildet. Dies ist jedoch nur beispielhaft zu verstehen. Der Drehmomentträger 70 ist in nicht dargestellter Weise mit der Fanwelle gekoppelt.

Beim Ausführungsbeispiel der Figuren 4 und 5 sind der Drehmomentträger 70, die vordere Trägerplatte 810 und die hintere Trägerplatte 820 einteilig ausgebildet, während sie beim Ausführungsbeispiel der Figuren 2 und 3 dreiteilig ausgebildet sind. Durch die Zusammenführung des Drehmomentträgers und der Trägerplatten zu einem Teil kann der Trägerstift 7 der Figuren 2 und 3 wegfallen. Die Abnahme des Drehmoments erfolgt nicht mehr mittig in der Bohrung des Planeten-Gleitlagerstifts 6, sondern von der vorderen Trägerplatte 810. Dementsprechend wird beim Ausführungsbeispiel der Figuren 4 und 5 auch kein Gelenklager (entsprechend dem Gelenklager 73 der Figuren 2 und 3) benötigt.

Zum einteiligen Aufbau von vorderer Trägerplatte 810, hinterer Trägerplatte 820 und Drehmomentträger 70 wird weiter angemerkt, dass die vordere Trägerplatte 810 und die hintere Trägerplatte 820 durch am Umfang ausgebildete Wandflächen 830 miteinander verbunden sind, zwischen denen sich jeweils im wesentlichen rechteckförmige Aussparungen 840 befinden, die der Aufnahme jeweils eines Planetenrads dienen. Weiter weist die durch die beiden Trägerplatten 810, 820 und den Drehmomentträger 70 gebildete strukturelle Einheit axiale Bohrungen 77 auf, die der Ankopplung weiterer Teile (nicht dargestellt) für eine Drehmomentübertragung dienen können.

Die dargestellte Anzahl von fünf Planeten-Gleitlagerstiften 6, fünf Verbindungsstegen 76 und fünf axialen Bohrungen 77 ist nur beispielhaft zu verstehen.

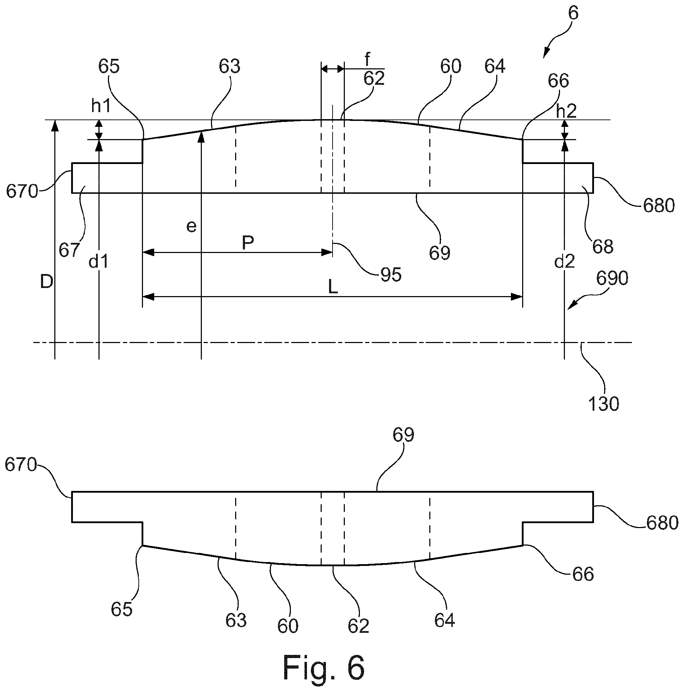

Die Figur 6 erläutert beispielhaft die Ausgestaltung und die relevanten Parameter eines Planeten-Gleitlagerstifts, der entsprechend einem Planeten-Gleitlagerstift 6 gemäß den Figuren 2 bis 5 ausgebildet ist. In der Schnittdarstellung der Figur 6 ist dabei eine Längsachse 130 des Planeten-Gleitlagerstifts 6 erkennbar. Diese ist im Wesentlichen identisch mit der Drehachse 110 des Planetenrads 110, vgl. Figur 2, wobei jedoch die hydrodynamische Bauweise des Gleitlagers eine kleine Exzentrizität z.B. im Bereich von Zehntelmillimetern mit sich bringt. Der Planeten-Gleitlagerstift 6 bildet angrenzend an eine innere Mantelfläche bzw. Innenfläche 69 des Planeten-Gleitlagerstifts 6 eine axiale Öffnung 690 aus, die dazu dient, einen Trägerstift eines Drehmomentträgers aufzunehmen, beispielsweise den Trägerstift 7 der Figur 2.

Der Planeten-Gleitlagerstift 6 bildet eine außenseitige Anlagefläche 60 aus, die ein axial vorderes Ende 65 und ein axial hinteres Ende 66 aufweist. Der axiale Abstand zwischen diesen beiden Enden wird mit L bezeichnet. Zwischen diesen beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht.

Der Planeten-Gleitlagerstift 6 weist dabei einen minimalen Außendurchmesser d1 an seinem axialen Ende 65, einen minimalen Außendurchmesser d2 an seinem axialen Ende 66 und einen maximalen Außendurchmesser D zwischen seinen axialen Enden 65, 66 auf. Dabei definiert die halbe Differenz h1 zwischen dem maximalen Außendurchmesser D und dem minimalen Außendurchmesser d1 die Balligkeit der Anlagefläche zwischen der axialen Position des maximalen Außendurchmessers und dem einen Ende 65. Weiter definiert die halbe Differenz h2 zwischen dem maximalen Außendurchmesser D und dem minimalen Außendurchmesser d2 die Balligkeit der Anlagefläche zwischen der axialen Position des maximalen Außendurchmessers und dem anderen Ende 66.

Es kann vorgesehen sein, dass d1 gleich d2 oder alternativ dass d1 ungleich d2 ist. Dementsprechend ist h1 gleich h2 oder es ist h1 ungleich h2.

Die Differenz zwischen dem maximalen Außendurchmesser D und dem Außendurchmesser e an einer betrachteten axialen Position des Planeten-Gleitlagerstifts nimmt zu den axialen Enden 65, 66 des Planeten-Gleitlagerstifts 6 stetig zu.

Der maximale Außendurchmesser D ist im Ausführungsbeispiel der Figur 6 an der axialen Mitte 95 des Planeten-Gleitlagerstifts 6 und in einem zylindrischen Bereich 62 der axialen Länge f um diese axiale Mitte 95 herum realisiert. Das Maximum des Außendurchmessers D ist somit in einem zylindrischen Bereich 62 konstanten Außendurchmessers realisiert, der sich symmetrisch zur axialen Mitte 95 über eine definierte axiale Länge f erstreckt. Dies ist allerdings nicht notwendigerweise der Fall. Alternativ wird das Maximum des Außendurchmessers D lediglich entlang einer Umfangslinie bzw. im in der Figur 6 dargestellten Längsschnitt an einem Scheitelpunkt erreicht.

Der axiale Abstand zwischen dem axial vorderen Ende 65 der Anlagefläche 60 zum Maximum des Außendurchmesser D oder, wenn das Maximum in einem zylindrischen Bereich ausgebildet ist, zur Mitte dieses zylindrischen Bereichs, wird in der Figur 6 als P bezeichnet. In der Figur 6 liegt P dabei aufgrund der symmetrischen Ausgestaltung der Anlagefläche 60 in der axialen Mitte 95 der Anlagefläche.

Die Anlagefläche 60 des Planeten-Gleitlagerstifts 6 bildet im Längsschnitt eine erste konvexe Kurve 63 aus, die sich zwischen dem zylindrischen Bereich 62 und dem vorderen axialen Ende 65 erstreckt, sowie eine zweite konvexe Kurve 64 aus, die sich zwischen dem zylindrischen Bereich 62 und dem hinteren axialen Ende 66 erstreckt. Die Form der Kurven 63, 64 kann grundsätzlich beliebig sein. Beispielsweise sind die Kurven kreisförmig, parabelförmig oder gradlinig ausgebildet.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 bis 5 erläutert, ist der Planeten-Gleitlagerstift 6 an diesen Enden 67, 68 jeweils an einer Trägerplatte befestigt.

Der Planeten-Gleitlagerstift 6 realisiert in Ausgestaltungen bestimmte Verhältnisse der wie oben definierten Parameter h, P, L und D.

So gilt für das Verhältnis der Länge P zur axialen Gesamtlänge L: 0 < P/L < 1. Dies bedeutet, dass das Maximum des Außendurchmessers D grundsätzlich an beliebiger axialer Position zwischen den beiden axialen Enden 65, 66 der Anlagefläche des Planeten-Gleitlagerstifts 6 ausgebildet sein kann. Insbesondere sind auch asymmetrische Anordnungen möglich.

Es gilt für das Verhältnis der axialen Länge des zylindrischen Bereichs f zur axialen Gesamtlänge L: 0 ≤ f/L ≤ 0,75. Je größer dieses Verhältnis, desto größer die axiale Erstreckung des zylindrischen Bereichs. Wenn das Verhältnis f/L gleich Null ist, ist f gleich Null, d. h. ein zylindrischer Bereich konstanten Außendurchmessers ist dann nicht vorhanden.

Es gilt für das Verhältnis der halben Differenz h1, h2 zwischen dem maximalen Außendurchmesser D und dem minimalen Außendurchmesser d1, d2 zum maximalen Außendurchmesser D: 0,00005 ≤ h1/D ≤ 0,005 sowie 0,00005 ≤ h2/D ≤ 0,005. Diese Verhältnisse bestimmen die Balligkeit der Anlagefläche 60. Dabei kann h1 gleich h2 sein. Der in der Figur 6 dargestellte Planeten-Gleitlagerstift 6 ist rotationssymmetrisch ausgebildet.

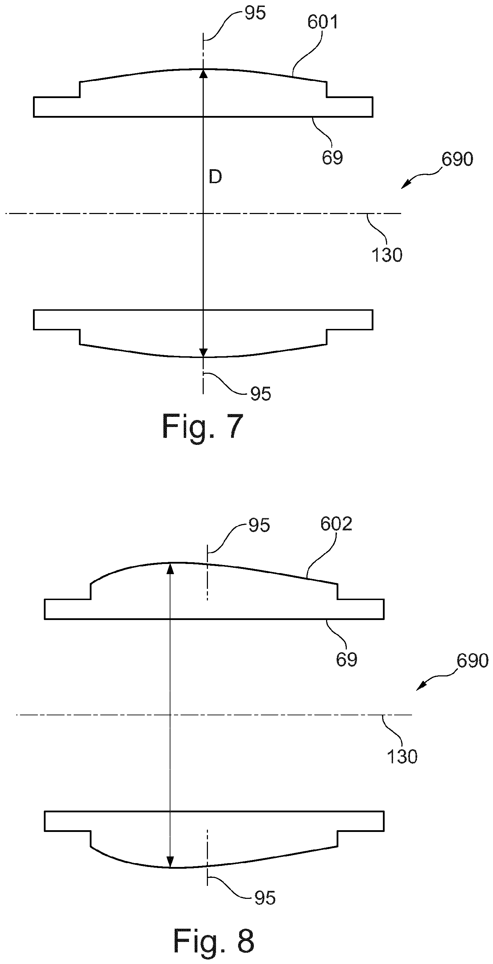

Die Figuren 7-10 zeigen jeweils in einer Schnittdarstellung verschiedene Ausgestaltungen eines Planeten-Gleitlagerstifts 6 entsprechend dem Planeten-Gleitlagerstift der Figur 6, wobei erkennbar ist, dass der Planeten-Gleitlagerstift 6 angrenzend an die Innenfläche 69 eine Öffnung 690 ausbildet, die entsprechend der Beschreibung der Figuren 2 und 3 beispielsweise der Aufnahme eines Planeten-Gleitlagerstifts dient.

Die in Bezug auf die Figur 6 erläuterten Parameter f, h, P und L sind dabei in den Figuren 7-10 unterschiedlich gewählt, wie im Folgenden ausgeführt wird.

Beim Ausführungsbeispiel der Figur 7 ist die Anlagefläche 601 ohne einen zylindrischen Bereich ausgebildet, d. h. der Parameter f ist gleich Null. Dementsprechend ist der maximale Außendurchmesser D in der axialen Mitte 95 des Planeten-Gleitlagerstifts 6 realisiert. Die beiden konvexen Kurven 63, 64 der Figur 6 bilden eine gemeinsame Kurve, die beispielsweise durch einen Kreisbogen gebildet ist.

Der Planeten-Gleitlagerstift der Figur 7 ist dabei spiegelsymmetrisch bezüglich seiner axialen Mitte 95 ausgebildet.

Beim Ausführungsbeispiel der Figur 8 ist das Maximum des Außendurchmessers D außerhalb der axialen Mitte 95 realisiert, so dass eine Asymmetrie in der Formgebung der Anlagefläche 602 realisiert ist. Ein zylindrischer Bereich ist wiederum nicht vorgesehen. In der betrachteten Schnittdarstellung bilden die beiden konvexen Kurven 63, 64 der Figur 6 eine gemeinsame Kurve 602. Diese wird beispielsweise durch einen parabelförmigen Bogen gebildet.

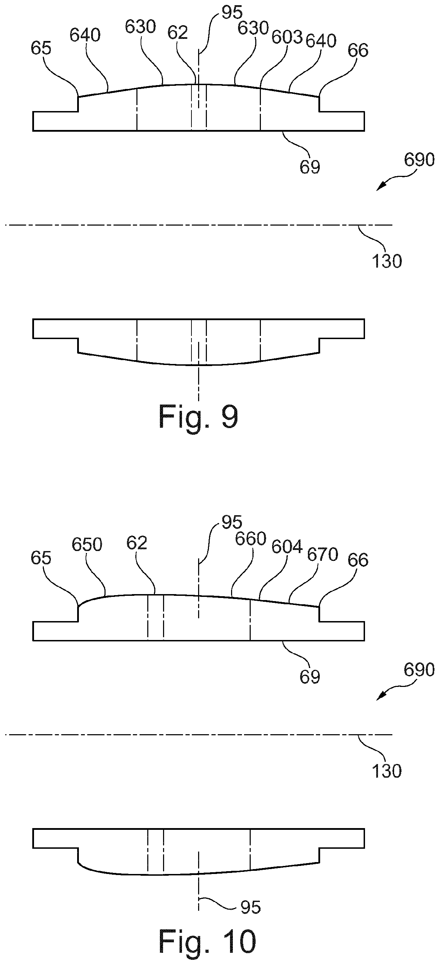

Die Figur 9 betrachtet ein Ausführungsbeispiel, bei dem die Anlagefläche 603 einen zylindrischen Bereich 62 ausbildet, in dem der Außendurchmesser D maximal ist. Dieser Bereich 62 ist mittig ausgebildet, so dass der Planeten-Gleitlagerstift 6 spiegelsymmetrisch bezüglich seiner axialen Mitte 95 ist.

Zu beiden Seiten angrenzend an den zylindrischen Bereich 62 bildet die Anlagefläche 603 Bereiche aus, die kreisförmig gebogen sind, wobei sich an diese Bereiche konisch geformte Bereiche anschließen, die sich bis zu den axialen Enden 65, 66 der Anlagefläche 603 erstrecken. In der Schnittdarstellung der Figur 9 bildet die Anlagefläche dem kreisförmig gebogenen Bereich einen Kreisbogen 630 und dem konisch geformten Bereich einen gerade Linie 640 aus, wobei letzterer bis zu den axialen Enden 65, 66 der Anlagefläche 603 verläuft.

Die Figur 10 zeigt ein Ausführungsbeispiel, bei dem das Maximum des Außendurchmessers D außerhalb der axialen Mitte 95 realisiert, so dass eine Asymmetrie in der Formgebung der Anlagefläche 604 realisiert ist. Die Anlagefläche 604 bildet dabei einen zylindrischen Bereich 62 aus, in dem der Außendurchmesser D maximal ist. Dieser Bereich 62 ist jedoch versetzt zu der axialen Mitte 95 des Planeten-Gleitlagerstifts 6 ausgebildet. Von dem zylindrischen Bereich 62 erstreckt ein parabelförmig gebogener Bereich bis zum axial vorderen Ende 65 der Anlagefläche 604, der in der Figur 10 eine parabelförmig Linie 650 bildet. Zwischen dem zylindrischen Bereich 62 und dem axial hinteren Ende 66 der Anlagefläche 604 sind zwei unterschiedlich geformte Bereiche ausgebildet, zunächst ein kreisförmig gebogener Bereich und daran anschließend und sich bis zum axialen Ende 66 erstreckender, konisch verjüngender Bereich, die in der Schnittdarstellung der Figur 10 einen Kreisbogen 660 und eine gerade Linie 670 bilden.

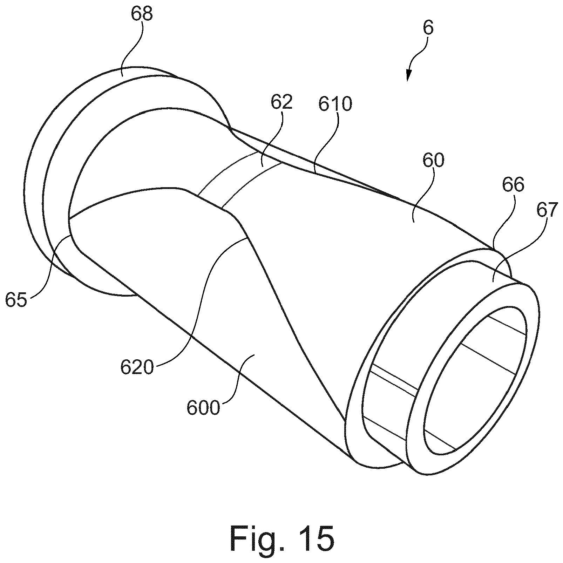

Die Figuren 15 bis 20 zeigen ein weiteres Ausführungsbeispiel eines Planeten-Gleitlagerstifts 6, wobei sich dieses Ausführungsbeispiel dadurch auszeichnet, dass die ballig ausgebildete Anlagefläche sich nicht über einen Umfangswinkel von 360°, sondern über einen Umfangswinkel kleiner als 360° erstreckt.

Bezug nehmend zunächst auf die Figuren 15 bis 18 bildet der Planeten-Gleitlagerstift 6 eine außenseitige Anlagefläche 60 aus, die ein axial vorderes Ende 65 und ein axial hinteres Ende 66 aufweist. Der axiale Abstand zwischen diesen beiden Enden ist mit L bezeichnet, vgl. Figur 17. Zwischen den beiden Enden 65, 66 bildet die Anlagefläche 60 eine Balligkeit in dem Sinne aus, dass ihr Außendurchmesser zu den axialen Enden 65, 66 hin abnimmt und an den axialen Enden 65, 66 ein Minimum erreicht.

Dabei verhält es sich so, dass die ballig ausgebildete Anlagefläche 60 sich in Umfangsrichtung über einen Bereich kleiner 360° erstreckt. Dieser ballig ausgebildete Bereich wird durch zwei Begrenzungslinien 610, 620 begrenzt. Der Winkel, über den sich die Anlagefläche 60 in Umfangsrichtung erstreckt, variiert dabei in Abhängigkeit von der axialen Position, wie noch erläutert wird, so dass die Begrenzungslinien 610, 620 nicht gradlinig verlaufen, sondern gebogen sind. Außerhalb des Umfangsbereichs, in dem der Planeten-Gleitlagerstift 6 eine Balligkeit ausbildet, bildet der Planeten-Gleitlagerstift 6 einen zylindrisch geformten Bereich 600. Die Balligkeit des Planeten-Gleitlagerstifts 6 im Bereich der Anlagefläche 60 wird durch einen Materialabtrag im Bereich der Anlagefläche 60 realisiert, der zu den axialen Enden 65, 66 hin zunimmt.

Der Planeten-Gleitlagerstift 6 weist in dem Umfangsbereich, in dem er eine Balligkeit ausbildet, an seinen axialen Enden 65, 66 einen minimalen Außendurchmesser d und zwischen seinen axialen Enden 65, 66 einen maximalen Außendurchmesser D auf. Dabei definiert die Differenz zwischen D/2 und d/2 die maximale Höhe h der Balligkeit der Anlagefläche zwischen der axialen Position des maximalen Außendurchmessers und den beiden Enden 65, 66. Alternativ kann der minimale Außendurchmesser an den beiden Enden 65, 66 unterschiedlich sein. Insofern wird auf die Figur 6 Bezug genommen.

In dem Umfangsbereich, in dem der Planeten-Gleitlagerstift 6 eine Balligkeit ausbildet, ist der maximale Außendurchmesser D an der axialen Mitte 95 des Planeten-Gleitlagerstifts 6 und in einem zylindrischen Bereich 62 der axialen Länge f um diese axiale Mitte 95 herum realisiert, vgl. Figur 17. Dies ist allerdings nicht notwendigerweise der Fall. Alternativ kann beispielsweise vorgesehen sein, dass das Maximum des Außendurchmessers D lediglich entlang einer Umfangslinie oder außerhalb der axialen Mitte 95 realisiert ist.

Der axiale Abstand zwischen dem axial vorderen Ende 65 der Anlagefläche 60 zum Maximum des Außendurchmesser D oder, wenn das Maximum in einem zylindrischen Bereich ausgebildet ist, zur Mitte dieses zylindrischen Bereichs, ist in der Figur 17 als P bezeichnet. In der Figur 17 liegt P dabei aufgrund der symmetrischen Ausgestaltung der Anlagefläche 60 in der axialen Mitte 95 der Anlagefläche.

In dem Umfangsbereich, in dem der Planeten-Gleitlagerstift 6 eine Balligkeit ausbildet, bildet die Anlagefläche 60 des Planeten-Gleitlagerstifts 6 im Längsschnitt eine erste konvexe Kurve 63 aus, die sich zwischen dem zylindrischen Bereich 62 und dem vorderen axialen Ende 65 erstreckt, sowie eine zweite konvexe Kurve 64 aus, die sich zwischen dem zylindrischen Bereich 62 und dem hinteren axialen Ende 66 erstreckt. Die Form der Kurven 63, 64 kann grundsätzlich beliebig sein. Beispielsweise sind die Kurven kreisförmig, parabelförmig oder gradlinig ausgebildet.

Der Planeten-Gleitlagerstift 6 weist axiale Verlängerungen bzw. Enden 67, 68 auf, die jeweils eine vordere axialen Stirnseite 670 des Planeten-Gleitlagerstifts 6 und eine hintere axiale Stirnseite 680 des Planeten-Gleitlagerstifts bilden. Wie in Bezug auf die Figuren 2 bis 5 erläutert, kann vorgesehen sein, dass der Planeten-Gleitlagerstift 6 an diesen Enden 67, 68 jeweils an einer Trägerplatte befestigt ist. Im Ausführungsbeispiel der Figuren 15 bis 20 sind die Enden 67, 68 unterschiedlich ausgestaltet. Alternativ können sie in identischer Weise ausgebildet sein.

Der Planeten-Gleitlagerstift 6 realisiert in dem Umfangsbereich, in dem er eine Balligkeit ausbildet, bestimmte Verhältnisse der wie oben definierten Parameter h, P, L und D. Diese Verhältnisse können entsprechend den in Bezug auf die Figur 6 beschriebenen Verhältnissen ausgebildet sein.

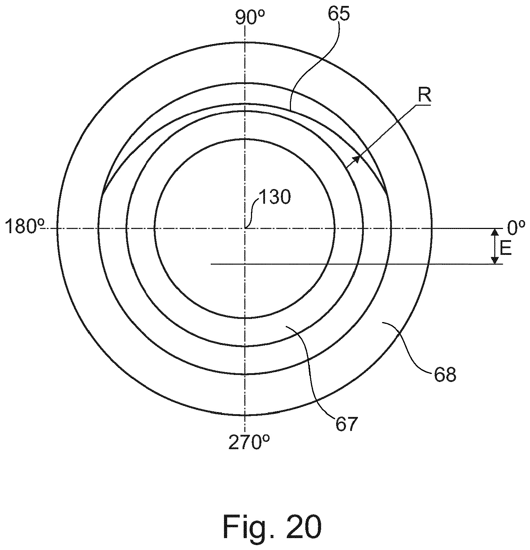

Nachfolgend werden Form und Erstreckungsumfang der ballig ausgebildeten Anlagefläche 60 beim Ausführungsbeispiel der Figuren 15 bis 20 näher erläutert. Dabei zeigt die Figur 19 eine erste Parametrisierung und die Figur 20 eine zweite Parametrisierung zur Beschreibung der Geometrie der ballig ausgebildeten Anlagefläche 60. Diese Parametrisierungen sind jedoch nur beispielhaft zu verstehen. Zunächst wird die Parametrisierung der Figur 19 betrachtet.

Danach gibt gemäß der Figur 19 der Winkel ϕ den Umfangswinkel an, über den der ballige Bereich in Umfangsrichtung ausgeprägt ist. Den Figuren 15, 16 und 18 ist dabei entnehmbar, dass der Umfangswinkel ϕ im dargestellten Ausführungsbeispiel in Umfangsrichtung nicht konstant ist, sondern abhängig von der axialen Position zwischen den beiden Enden 65, 66 variiert. In anderen Ausführungsbeispielen kann vorgesehen sein, dass der Erstreckungsbereich in Umfangsrichtung bzw. der Winkel ϕ konstant ist.

Die Variation der Erstreckung der ballig ausgebildeten Anlagefläche 60 in Umfangsrichtung ist dabei derart, dass die ballig ausgebildete Anlagefläche 60 sich an den axialen Enden 65, 66 der Anlagefläche 60 über einen größeren Umfangswinkel ϕ erstreckt als im Bereich 62 des maximalen Außendurchmessers D. So weist die ballig ausgebildete Anlagefläche 60 im zylindrischen Bereich 62 konstanten Außendurchmessers eine ballig ausgebildete Anlagefläche 60 auf, die sich über einen minimalen Umfangswinkel ϕ1 erstreckt, vgl. Figur 18. Ausgehend von diesem minimalen Umfangswinkel ϕ1 vergrößert sich der Umfangswinkel ϕ zu den axialen Enden 65, 66 der Anlagefläche 60 hin stetig zu einem maximalen Umfangswinkel ϕ2. Entsprechend weisen die beiden Begrenzungslinien 610, 620 der ballig ausgebildeten Anlagefläche 60 einen minimalen Abstand im Bereich 62 des maximalen Außendurchmessers D und einen maximalen Abstand an den axialen Enden 65, 66 auf. Die Begrenzungslinien 610, 620 sind jeweils bezüglich der axialen Mitte 95 symmetrisch ausgebildet. Des Weiteren sind die Begrenzungslinien 610, 620 bezüglich einer Geraden spiegelsymmetrisch ausgebildet, die sich in axialer Richtung zwischen ihnen erstreckt (und die in der Darstellung der Figur 18 in der Projektion von oben auf der Mittelachse 130 liegt).

In der Figur 19 ist des Weiteren ein Winkel θ angegeben, der die Orientierung des balligen Bereichs innerhalb des Winkelbereichs zwischen 0 und 360° angibt, wobei üblicherweise gilt, dass θ = ½ ϕ ist. Während somit der Winkel ϕ die Ausprägung des baldigen Bereichs in Umfangsrichtung angibt, gibt der Winkel θ die räumliche Orientierung an. Wenn beispielsweise der Winkel ϕ 120° beträgt, so kann über den Winkel θ angegeben sein, dass sich der Winkel ϕ beispielsweise im Winkelbereich zwischen 180° und 240°, also im dritten Quartal erstreckt (180° ≤ θ ≤ 240°), wobei der Winkel θ im mathematisch positiven Drehsinn gemessen wird und die x-Achse des kartesischen Koordinatensystems den Winkel 0° definiert. Allgemein gilt, dass die Orientierung der Balligkeit entlang des Umfangs beliebig ist und von der Einbaulage abhängt.

Die Figur 19 zeigt als weiteren Parameter die Höhe h der Balligkeit. Insofern wird auch auf die Figuren 17 und 6 Bezug genommen. Dabei ist anhand der Figur 19 zu erkennen, dass die Höhe h der Balligkeit keine Konstante ist, sondern mit zunehmendem Abstand von der Mitte zwischen den beiden Begrenzungslinien 610, 620 zu den Begrenzungslinien 610, 620 hin abnimmt. Dadurch wird erreicht, dass der Übergang zwischen dem zylindrischen Bereich 600 des Planeten-Gleitlagerstifts 6 und dem ballig ausgebildeten Bereich 60 ohne eine sprunghafte Dickenänderung erfolgt. Die Begrenzungslinien 610, 620 stellen lediglich Lichtkanten dar, die den Übergang vom balligen Bereich zum zylindrischen Bereich angeben.

Der Winkel ϕ liegt beispielsweise im Bereich zwischen 10° und 350°. Insbesondere kann dieser Winkel im Bereich zwischen 10° und 180° liegen. Beispielsweise liegt er im Bereich zwischen 10° und 120°, insbesondere im Bereich zwischen 30° und 80°. Die Winkeldifferenz zwischen ϕ1 und ϕ2 liegt dabei beispielsweise im Bereich zwischen 10° und 120°, insbesondere im Bereich zwischen 40° und 80°.

Sofern der Winkel ϕ kleiner als 180° ist, kann auch mehr als eine ballig ausgebildete Anlagefläche 60 in Umfangsrichtung realisiert sein.

Die Figur 20 zeigt ebenso wie die Figur 19 den Planeten-Gleitlagerstift 6 in einer Ansicht links von vorne. Es ist lediglich eine unterschiedliche Parametrisierung angegeben. So erfolgt die Parametrisierung über den Radius R der Balligkeit in Umfangsrichtung an den axialen Enden 65, 66 in Verbindung mit einer Exzentrizität E. Die Exzentrizität gibt den Abstand zwischen der Mittelachse des Parameters "Radius" und der Mittelachse des Gleitlagerstift an. Je größer die Höhe h der Balligkeit ist, desto geringer ist die Krümmung in Umfangsrichtung an den Enden 65, 66, desto größer ist der Radius des zugehörigen Kreises und dementsprechend desto größer ist auch die Exzentrizität E. Die Exzentrizität E ist somit ein Parameter für die Balligkeit der Anlagefläche 60 des Planeten-Gleitlagerstifts 6.

Dabei wird darauf hingewiesen, dass der Radius R in Umfangsrichtung konstant ist. Der Radius R variiert lediglich in axialer Richtung. So ist der Radius im zylindrischen Bereich 62 konstanten Außendurchmessers am größten und nimmt zu den axialen Enden 65, 66 hin ab.

Alternativ kann vorgesehen sein, dass der Radius R in der Mitte zwischen den beiden Begrenzungslinien 610, 620 (in der Figur 20 auf der 90° Achse) maximal ist und zu den Begrenzungslinien 610, 620 hin sukzessive abnimmt, bis der Radius des zylindrischen Bereichs 600 erreicht ist. Hierdurch wird ein tangentialer Übergang zwischen den Bereichen 60 und 600 erreicht. Ein solcher tangentialer Übergang ist bei konstantem Radius R in Umfangsrichtung nicht gegeben.

Für den Radius R gilt allgemein, dass er größer oder gleich D/2 ist, vgl. Figur 17, wobei der Radius R zu den axialen Enden 65, 66 hin abnimmt.

Die in Bezug auf die Figuren 6 bis 12 beschriebenen Variationen der Balligkeit des Planeten-Gleitlagerstifts 6 können in gleicher Weise auch an dem ballig ausgebildeten Bereich des Planeten-Gleitlagerstifts 6 der Figuren 15 bis 20 realisiert sein.

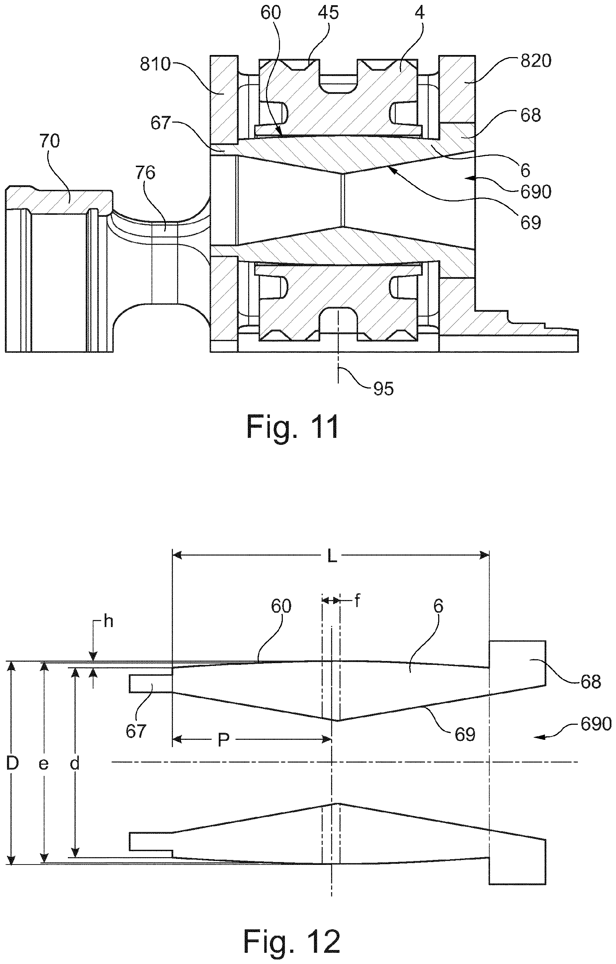

Die Figur 11 zeigt ein weiteres Ausführungsbeispiel eines Planeten-Gleitlagerstifts 6, der ein Gleitlager mit einem Planetenrad 4 mit einer Außenverzahnung 45 ausbildet. Der Planeten-Gleitlagerstift 6 ist fest mit einer Struktur verbunden, die entsprechend dem Ausführungsbeispiel der Figuren 4 und 5 aus einer vorderen Trägerplatte 810, einer hinteren Trägerplatte 820 und einem Drehmomentträger 70 besteht. Dazu umfasst der Planeten-Gleitlagerstift 6 eine erste axiale Verlängerung 67, die in der vorderen Trägerplatte 810 befestigt ist und eine zweite axiale Verlängerung 68, die in der hinteren Trägerplatte 820 befestigt ist.

Der Drehmomentträger 70 ist über Verbindungsstege 76 fest mit der vorderen Trägerplatte 810 verbunden. Insofern wird auf die Beschreibung der Figuren 4 und 5 verwiesen.

Der Planeten-Gleitlagerstift 6 besitzt eine ballig ausgebildete Anlagefläche 60, wie in Bezug auf die Figur 6 erläutert worden ist. Der Planeten-Gleitlagerstift 6 weist des Weiteren eine Innenfläche 69 zur axialen Bohrung 690 auf, die eine von einer zylindrischen Form abweichende Form aufweist. So ist die Bohrung 690 doppelt konisch ausgebildet, wobei der Innendurchmesser der Bohrung 690 in der axialen Mitte 95 des Planeten-Gleitlagerstifts 6 ein Minimum und zu den beiden axialen Enden hin ein Maximum aufweist. In anderen Ausführungsbeispielen ist die Bohrung 690 zylindrisch ausgebildet.

Die Figur 12 zeigt den Planeten-Gleitlagerstift 6 der Figur 11 in vergrößerte Darstellung, wobei entsprechend der Darstellung der Figur 6 die dort angegebenen, für die Ausbildung des Planeten-Gleitlagerstifts 6 relevanten Parameter D, d, e, f, h, P und L ebenfalls dargestellt sind. Hinsichtlich der Definition dieser Parameter wird auf die Beschreibung der Figur 6 verwiesen. Anders als in der Figur 6 ist lediglich angenommen, dass der minimalen Außendurchmesser des Planeten-Gleitlagerstifts 6 an den beiden axialen Enden identisch ist, so dass dieser Parameter mit d angegeben ist (ohne die in der Figur 6 vorgenommene Differenzierung zwischen d1 und d2 und dementsprechend ebenfalls ohne die Differenzierung zwischen h1 und h2).

Die Unterschiede des Planeten-Gleitlagerstifts 6 der Figuren 11 und 12 zum Planeten-Gleitlagerstift der Figur 6 bestehen neben der unterschiedlichen Formgebung der Innenfläche 69 des Planeten-Gleitlagerstifts 6 in einer unterschiedlichen Ausgestaltung des vorderen axialen Endes 67 und des hinteren axialen Endes des 68 des Planeten-Gleitlagerstifts 6, die gemäß den Figuren 11 und 12 dazu vorgesehen und ausgebildet sind, in Trägerplatten 810, 820 befestigt zu sein, die einteilig zusammen mit dem Drehmomentträger 70 ausgebildet sind. Die beiden axialen Enden 67, 68 können dabei eine unterschiedliche Formgebung aufweisen, wie in den Figuren 11 und 12 dargestellt ist.

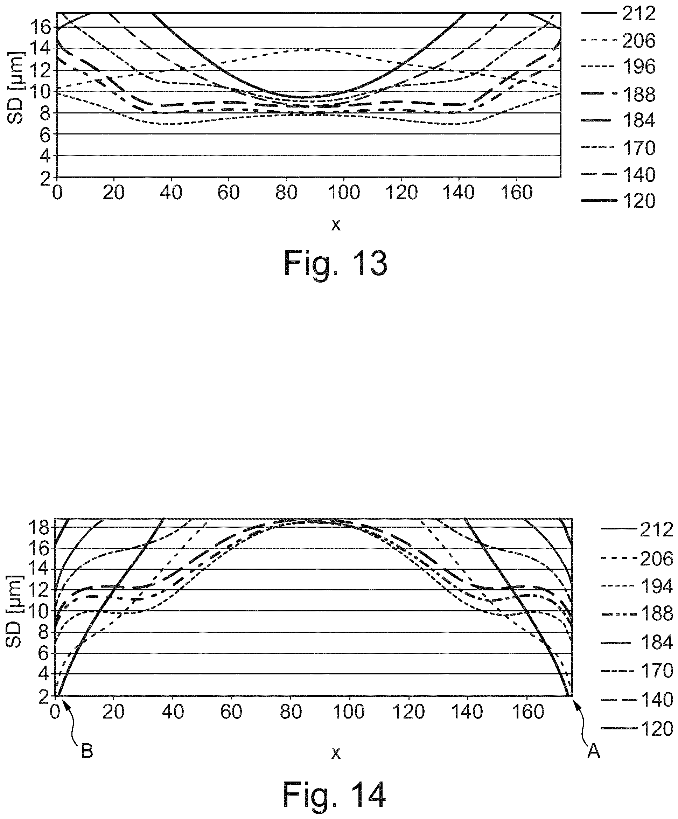

Die mit der Erfindung verbundenen Vorteile sind in den Figuren 13 und 14 illustriert, die jeweils die Schmierfilmdicke des Gleitlagers in Abhängigkeit von der axialen Position des Gleitlagers darstellen. Die Figur 14 zeigt dabei die Verhältnisse an einem Planeten-Gleitlagerstift, der eine rein zylindrisch geformte, nicht mit einer Balligkeit versehene Außenfläche aufweist, bei 80 % Last. Es ist zu erkennen, dass die Schmierfilmdicke zu den axialen Enden hin stark abnimmt (vergleiche Pfeile A, B), was zu einem erhöhten Schmierfilmdruck und der Gefahr eines Metall-Metall-Kontaktes zwischen dem Planeten-Gleitlagerstift und dem Planetenrad führt.

Die Figur 13 zeigt die Schmierfilmdicke des Gleitlagers in Abhängigkeit von der axialen Position des Gleitlagers für einen Planeten-Gleitlagerstift, der eine mit einer Balligkeit versehene Außenfläche aufweist, bei 100 % Last. Eine ausreichende Schmierfilmdicke ist auch an den axialen Enden gegeben.

Die vorliegende Erfindung beschränkt sich in ihrer Ausgestaltung nicht auf die vorstehend beschriebenen Ausführungsbeispiele. Insbesondere sind die beschriebenen konkreten Formgebungen des Planeten-Gleitlagerstifts nur beispielhaft zu verstehen. Sofern Bereiche definiert sind, so umfassen diese sämtliche Werte innerhalb dieser Bereiche sowie sämtliche Teilbereiche, die in einen Bereich fallen.

## Patentansprüche

1. Planetengetriebe (100), das aufweist:
- ein Sonnenrad (3), das um eine Drehachse (11) des Planetengetriebes (100) rotiert und von einer Sonnenwelle (30) angetrieben wird, wobei die Drehachse (11) eine axiale Richtung des Planetengetriebes (100) definiert,
- eine Mehrzahl von Planetenrädern (4), die von dem Sonnenrad (3) angetrieben werden,
- ein Hohlrad (5), mit dem die Mehrzahl von Planetenrädern (4) in Eingriff steht, und
- eine Mehrzahl von Planeten-Gleitlagerstiften (6), die jeweils eine außenseitige Anlagefläche (60) aufweisen, die ein axial vorderes Ende (65) und ein axial hinteres Ende (66) aufweist, wobei
- jeweils ein Planeten-Gleitlagerstift (6) in einem Planetenrad (4) angeordnet ist und der Planeten-Gleitlagerstift (6) und das Planetenrad (4) ein geschmiertes Gleitlager bilden, wobei
- die Planeten-Gleitlagerstifte (6) an ihrer Anlagefläche (60) jeweils eine Balligkeit in dem Sinne ausbilden, dass ihr Außendurchmesser (e) von einem maximalen Außendurchmesser (D) zu mindestens einem axialen Ende (65, 66) der Anlagefläche (60) hin abnimmt und an dem axialen Ende (65, 66) ein Minimum aufweist,
**dadurch gekennzeichnet,**
**dass** der Planeten-Gleitlagerstift (6) minimale Außendurchmesser (d1, d2) an beiden axialen Enden (65, 66) der Anlagefläche (60) und den maximalen Außendurchmesser (D) zwischen den axialen Enden (65, 66) aufweist, wobei die minimalen Außendurchmesser (d1, d2) an den beiden axialen Enden (65, 66) unterschiedlich sind, und/oder
**dass** der Planeten-Gleitlagerstift (6) außerhalb seiner axialen Mitte (95) und dabei zwischen den beiden axialen Enden (65, 66) der Anlagefläche (60) ein Maximum seines Außendurchmessers (D) aufweist.

2. Planetengetriebe nach Anspruch 1, **dadurch gekennzeichnet, dass** die Differenz zwischen dem maximalen Außendurchmesser (D) und dem Außendurchmesser (e) an einer axialen Position des Planeten-Gleitlagerstifts (6) zu mindestens einem axialen Ende des Planeten-Gleitlagerstifts (6) kontinuierlich zunimmt.

3. Planetengetriebe nach einem der vorangehenden Ansprüche, **gekennzeichnet,** dass das Maximum des Außendurchmessers (D) des Planeten-Gleitlagerstifts (6) durch eine Umfangslinie gebildet ist.

4. Planetengetriebe nach Anspruch 1, **dadurch gekennzeichnet, dass** das Maximum des Außendurchmessers (D) des Planeten-Gleitlagerstifts (6) durch einen zylindrischen Bereich (62) konstanten Außendurchmessers gebildet ist, der sich über eine definierte axiale Länge (f) erstreckt.

5. Planetengetriebe nach einem der vorangehenden Ansprüche, **dadurch gekennzeichnet, dass** das Verhältnis der halben Differenz (h1, h2) zwischen dem maximalen Außendurchmesser (D) und dem minimalen Außendurchmesser (d1, d2) des Planeten-Gleitlagerstifts (6) zum maximalen Außendurchmesser (D) zwischen 0,00005 und 0,005 liegt.

6. Planetengetriebe nach einem der vorangehenden Ansprüche, **dadurch gekennzeichnet, dass** der Planeten-Gleitlagerstift (6) eine ballig ausgebildete Anlagefläche (60) lediglich über einen Umfangswinkel (ϕ) kleiner als 360° ausbildet.

7. Planetengetriebe nach Anspruch 6, **dadurch gekennzeichnet, dass** der Umfangswinkel (ϕ), über den die ballig ausgebildete Anlagefläche (60) sich erstreckt, in axialer Richtung variiert.

8. Planetengetriebe nach Anspruch 6 oder 7, **dadurch gekennzeichnet, dass** die ballig ausgebildete Anlagefläche (60) sich am maximalen Außendurchmesser (D) über einen minimalen Umfangswinkel (ϕ1) erstreckt und der Umfangswinkel (ϕ) sich vom maximalen Außendurchmesser (D) zu den axialen Enden (65, 66) der Anlagefläche (60) hin stetig zu einem maximalen Umfangswinkel (ϕ2) vergrößert, so dass die ballig ausgebildete Anlagefläche (60) sich an den axialen Enden (65, 66) der Anlagefläche (60) über einen größeren Umfangswinkel (ϕ2) erstreckt als im Bereich des maximalen Außendurchmessers (D).

9. Planetengetriebe nach einem der vorangehenden Ansprüche, **dadurch gekennzeichnet, dass** die Planeten-Gleitlagerstifte (6) einstückig ausgebildet sind.

10. Planetengetriebe nach einem der vorangehenden Ansprüche, **dadurch gekennzeichnet, dass** der Planeten-Gleitlagerstift (6) ein axial vorderes Ende (67) und ein axial hinteres Ende (68) aufweist, die axial beabstandet zu dem axial vorderen Ende (65) und dem axial hinteren Ende (66) der Anlagefläche (60) sind, wobei der Planeten-Gleitlagerstift (6) an seinem vorderen axialen Ende (67) an einer vorderen Trägerplatte (81, 810) und an seinem hinteren axialen Ende (68) an einer hinteren Trägerplatte (82, 820) befestigt ausgebildet ist.

11. Planetengetriebe nach Anspruch 10, **dadurch gekennzeichnet, dass** der Planeten-Gleitlagerstift (6) fest mit der vorderen Trägerplatte (81, 810) und mit der hinteren Trägerplatte (82, 820) verbunden ist, wobei die vordere Trägerplatte (81, 810) zur Drehmomentübertragung mit einem Drehmomentträger (70) gekoppelt ist.

12. Planetengetriebe nach einem der vorangehenden Ansprüche, **dadurch gekennzeichnet, dass** der Planeten-Gleitlagerstift (6) innenseitig mit einer axialen Bohrung (690) versehen ist.

13. Planetengetriebe nach Anspruch 12, **dadurch gekennzeichnet, dass** der Innendurchmesser des Planeten-Gleitlagerstifts (6) entlang seiner axialen Erstreckung variiert.

14. Getriebefan-Triebwerk, das aufweist:
- eine Fanstufe (13),
- eine Fanwelle, über die die Fanstufe (13) angetrieben wird,
- eine Turbinenwelle,
**dadurch gekennzeichnet,**
**dass** die Turbinenwelle und die Fanwelle über ein Planetengetriebe (100) gemäß Anspruch 1 gekoppelt sind, wobei die Turbinenwelle die Sonnenwelle (30) bildet, die Planeten-Gleitlagerstifte (6) mit einem Drehmomentträger (70) gekoppelt sind und der Drehmomentträger (70) mit der Fanwelle gekoppelt ist.

## Claims

1. Planetary gearbox (100) which comprises:
- a sun gear (3) which rotates about a rotational axis (11) of the planetary gearbox (100) and is driven by a sun shaft (30), the rotational axis (11) defining an axial direction of the planetary gearbox (100),
- a plurality of planetary gears (4) which are driven by the sun gear (3),
- an internal gear (5), with which the plurality of planetary gears (4) are in engagement, and
- a plurality of planetary plain bearing pins (6) which in each case have an outer-side bearing face (60) which has an axially front end (65) and an axially rear end (66),
- in each case one planetary plain bearing pin (6) being arranged in a planetary gear (4), and the planetary plain bearing pin (6) and the planetary gear (4) forming a lubricated plain bearing,
- the planetary plain bearing pins (6) in each case configuring a convexity on their bearing face (60), in the sense that their external diameter (e) decreases from a maximum external diameter (D) towards at least one axial end (65, 66) of the bearing face (60) and has a minimum at the axial end (65, 66),
**characterized**
**in that** the planetary plain bearing pin (6) has minimum external diameters (d1, d2) at the two axial ends (65, 66) of the bearing face (60) and the maximum external diameter (D) between the axial ends (65, 66), the minimum external diameters (d1, d2) at the two axial ends (65, 66) being different, and/or
**in that** the planetary plain bearing pin (6) has a maximum of its external diameter (D) outside its axial centre (95) and between the two axial ends (65, 66) of the bearing face (60) here.

2. Planetary gearbox according to Claim 1, **characterized in that** the difference between the maximum external diameter (D) and the external diameter (e) at an axial position of the planetary plain bearing pin (6) increases continuously towards at least one axial end of the planetary plain bearing pin (6).

3. Planetary gearbox according to either of the preceding claims, **characterized in that** the maximum of the external diameter (D) of the planetary plain bearing pin (6) is formed by way of a perimeter line.

4. Planetary gearbox according to Claim 1, **characterized in that** the maximum of the external diameter (D) of the planetary plain bearing pin (6) is formed by way of a cylindrical region (62) of constant external diameter which extends over a defined axial length (f).

5. Planetary gearbox according to one of the preceding claims, **characterized in that** the ratio of half the difference (h1, h2) between the maximum external diameter (D) and the minimum external diameter (d1, d2) of the planetary plain bearing pin (6) to the maximum external diameter (D) lies between 0.00005 and 0.005.

6. Planetary gearbox according to one of the preceding claims, **characterized in that** the planetary plain bearing pin (6) configures a convexly configured bearing face (60) merely over a circumferential angle (ϕ) of less than 360°.

7. Planetary gearbox according to Claim 6, **characterized in that** the circumferential angle (ϕ), over which the convexly configured bearing face (60) extends, varies in the axial direction.

8. Planetary gearbox according to Claim 6 or 7, **characterized in that** the convexly configured bearing face (60) extends at the maximum external diameter (D) over a minimum circumferential angle (ϕ1), and the circumferential angle (ϕ) increases from the maximum external diameter (D) towards the axial ends (65, 66) of the bearing face (60) steadily to a maximum circumferential angle (ϕ2), with the result that the convexly configured bearing face (60) extends over a greater circumferential angle (ϕ2) at the axial ends (65, 66) of the bearing face (60) than in the region of the maximum external diameter (D).

9. Planetary gearbox according to one of the preceding claims, **characterized in that** the planetary plain bearing pins (6) are configured in one piece.

10. Planetary gearbox according to one of the preceding claims, **characterized in that** the planetary plain bearing pin (6) has an axially front end (67) and an axially rear end (68) which are spaced apart axially from the axially front end (65) and the axially rear end (66) of the bearing face (60), the planetary plain bearing pin (6) being configured such that it is fastened at its front axial end (67) to a front carrier plate (81, 810) and at its rear axial end (68) to a rear carrier plate (82, 820).

11. Planetary gearbox according to Claim 10, **characterized in that** the planetary plain bearing pin (6) is connected fixedly to the front carrier plate (81, 810) and to the rear carrier plate (82, 820), the front carrier plate (81, 110) being coupled to a torque support (70) for the transmission of torque.

12. Planetary gearbox according to one of the preceding claims, **characterized in that** the planetary plain bearing pin (6) is provided on the inner side with an axial bore (690).

13. Planetary gearbox according to Claim 12, **characterized in that** the internal diameter of the planetary plain bearing pin (6) varies along its axial extent.

14. Geared fan engine which comprises:
- a fan stage (13),
- a fan shaft, via which the fan stage (13) is driven,
- a turbine shaft,
**characterized**
**in that** the turbine shaft and the fan shaft are coupled via a planetary gearbox (100) according to Claim 1, the turbine shaft forming the sun shaft (30), the planetary plain bearing pins (6) being coupled to a torque support (70), and the torque support (70) being coupled to the fan shaft.

## Revendications

1. Train épicycloïdal (100), qui comprend :
- une roue planétaire (3), qui tourne autour d'un axe de rotation (11) du train épicycloïdal (100) et est entraînée par un arbre planétaire (30), l'axe de rotation (11) définissant une direction axiale du train épicycloïdal (100),
- une pluralité de roues satellites (4), qui sont entraînées par la roue planétaire (3),
- une couronne (5), avec laquelle la pluralité de roues satellites (4) s'engrène, et
- une pluralité de broches à paliers lisses de satellites (6), qui comprennent respectivement une surface d'appui extérieure (60), qui comprend une extrémité axialement avant (65) et une extrémité axialement arrière (66),
- une broche à palier lisse de satellite (6) étant disposée respectivement dans une roue satellite (4) et la broche à palier lisse de satellite (6) et la roue satellite (4) formant un palier lisse lubrifié,
- les broches à paliers lisses de satellites (6) formant, au niveau de leur surface d'appui (60), respectivement un bombement au sens que leur diamètre extérieur (e) diminue à partir d'un diamètre extérieur maximal (D) vers au moins une extrémité axiale (65, 66) de la surface d'appui (60) et présente un minimum à l'extrémité axiale (65, 66), **caractérisé en ce que**
la broche à palier lisse de satellite (6) présente des diamètres extérieurs minimaux (d1, d2) aux deux extrémités axiales (65, 66) de la surface d'appui (60) et le diamètre extérieur maximal (D) entre les extrémités axiales (65, 66), les diamètres extérieurs minimaux (d1, d2) étant différents aux deux extrémités axiales (65, 66), et/ou
**en ce que** la broche à palier lisse de satellite (6) présente un maximum de son diamètre extérieur (D) en dehors de son centre axial (95) et en l'occurrence entre les deux extrémités axiales (65, 66) de la surface d'appui (60).

2. Train épicycloïdal selon la revendication 1, **caractérisé en ce que** la différence entre le diamètre extérieur maximal (D) et le diamètre extérieur (e) à une position axiale de la broche à palier lisse de satellite (6) augmente de manière continue jusqu'à au moins une extrémité axiale de la broche à palier lisse de satellite (6).

3. Train épicycloïdal selon l'une des revendications précédentes, **caractérisé en ce que** le maximum du diamètre extérieur (D) de la broche à palier lisse de satellite (6) est formé par une ligne périphérique.

4. Train épicycloïdal selon la revendication 1, **caractérisé en ce que** le maximum du diamètre extérieur (D) de la broche à palier lisse de satellite (6) est formé par une région cylindrique (62) de diamètre extérieur constant qui s'étend sur une longueur axiale définie (f).

5. Train épicycloïdal selon l'une des revendications précédentes, **caractérisé en ce que** le rapport de la moitié de la différence (h1, h2) entre le diamètre extérieur maximal (D) et le diamètre extérieur minimal (d1, d2) de la broche à palier lisse de satellite (6) par rapport au diamètre extérieur maximal (D) est compris entre 0,00005 et 0,005.

6. Train épicycloïdal selon l'une des revendications précédentes, **caractérisé en ce que** la broche à palier lisse de satellite (6) forme une surface d'appui (60) formée de manière bombée seulement sur un angle périphérique (ϕ) inférieur à 360°.

7. Train épicycloïdal selon la revendication 6, **caractérisé en ce que** l'angle périphérique (ϕ), sur lequel la surface d'appui (60) formée de manière bombée s'étend, varie dans la direction axiale.

8. Train épicycloïdal selon la revendication 6 ou 7, **caractérisé en ce que** la surface d'appui (60) formée de manière bombée s'étend sur un angle périphérique minimal (ϕ1) au niveau du diamètre extérieur maximal (D) et l'angle périphérique (ϕ) augmente de manière continue à partir du diamètre extérieur maximal (D) vers les extrémités axiales (65, 66) de la surface d'appui (60) jusqu'à un angle périphérique maximal (ϕ2), de sorte que la surface d'appui (60) formée de manière bombée s'étend sur un plus grand angle périphérique (ϕ2) aux extrémités axiales (65, 66) de la surface d'appui (60) que dans la région du diamètre extérieur maximal (D).

9. Train épicycloïdal selon l'une des revendications précédentes, **caractérisé en ce que** les broches à paliers lisses de satellites (6) sont formées d'une seule pièce.

10. Train épicycloïdal selon l'une des revendications précédentes, **caractérisé en ce que** la broche à palier lisse de satellite (6) comprend une extrémité axialement avant (67) et une extrémité axialement arrière (68), qui sont espacées axialement de l'extrémité axialement avant (65) et de l'extrémité axialement arrière (66) de la surface d'appui (60), la broche à palier lisse de satellite (6) étant formée de manière fixée à une plaque de support avant (81, 810) à son extrémité axiale avant (67) et à une plaque de support arrière (82, 820) à son extrémité axiale arrière (68).

11. Train épicycloïdal selon la revendication 10, **caractérisé en ce que** la broche à palier lisse de satellite (6) est reliée fixement à la plaque de support avant (81, 810) et à la plaque de support arrière (82, 820), la plaque de support avant (81, 810) étant accouplée à un support de couple (70) pour la transmission de couple.

12. Train épicycloïdal selon l'une des revendications précédentes, **caractérisé en ce que** la broche à palier lisse de satellite (6) est dotée d'un alésage axial (690) du côté intérieur.

13. Train épicycloïdal selon la revendication 12, **caractérisé en ce que** le diamètre intérieur de la broche à palier lisse de satellite (6) varie le long de son étendue axiale.

14. Turbosoufflante à réducteur, qui comprend :
- un étage de soufflante (13),
- un arbre de soufflante, par le biais duquel l'étage de soufflante (13) est entraîné,
- un arbre de turbine,
**caractérisé en ce que**
l'arbre de turbine et l'arbre de soufflante sont accouplés par le biais d'un train épicycloïdal (100) selon la revendication 1, l'arbre de turbine formant l'arbre planétaire (30), les broches à paliers lisses de satellites (6) étant accouplées à un support de couple (70) et le support de couple (70) étant accouplé à l'arbre de soufflante.
